(19)

**Europäisches Patentamt**
**European Patent Office**
**Office européen des brevets**

(11) **EP 4 625 168 A1**

(12) **EUROPEAN PATENT APPLICATION**
published in accordance with Art. 153(4) EPC

(43) Date of publication:
01.10.2025 Bulletin 2025/40

(21) Application number: 23902450.8

(22) Date of filing: 22.11.2023

(51) International Patent Classification (IPC):
*G06F 9/50* (2006.01)

(52) Cooperative Patent Classification (CPC):
G06F 9/50

(86) International application number:
PCT/CN2023/133357

(87) International publication number:
WO 2024/125251 (20.06.2024 Gazette 2024/25)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.12.2022 CN 202211624304

(71) Applicant: Huawei Technologies Co., Ltd.
Shenzhen, Guangdong 518129 (CN)

(72) Inventors:
• SUN, Chumin
  Shenzhen, Guangdong 518129 (CN)

• ZHOU, Li
  Shenzhen, Guangdong 518129 (CN)
• REN, Yuxin
  Shenzhen, Guangdong 518129 (CN)
• FAN, Rui
  Shenzhen, Guangdong 518129 (CN)
• SUN, Jie
  Shenzhen, Guangdong 518129 (CN)
• CHEN, Donghui
  Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **RESOURCE ALLOCATION METHOD AND APPARATUS**

(57) Embodiments of this application provide a resource allocation method and apparatus. The method includes: obtaining running performance data of each task in a plurality of tasks, where the running performance data of each task includes running performance of the task in a corresponding sample resource scale; determining, based on the running performance data of each task in the plurality of tasks, running performance of each task in a case in which the task exclusively occupies a corresponding candidate resource scale; and determining, based on the running performance of each task in the plurality of tasks in a case in which the task exclusively occupies the corresponding candidate resource scale, a target resource corresponding to each task in the plurality of tasks. The solutions in embodiments of this application help to allocate proper computing power resources to the plurality of tasks, thereby improving overall running performance of the plurality of tasks.

```
500

┌─────────────────────────────────────────────────────────────┐
│ Obtain running performance data of each task in a plurality of tasks │ ～ 510
└─────────────────────────────────────────────────────────────┘
                            │
┌─────────────────────────────────────────────────────────────┐
│ Determine, based on the running performance data of each task in the plurality │
│ of tasks, running performance of each task in a case in which the task         │ ～ 520
│ exclusively occupies candidate resource scales corresponding to the plurality of │
│ tasks                                                                           │
└─────────────────────────────────────────────────────────────┘
                            │
┌─────────────────────────────────────────────────────────────┐
│ Determine, based on running performance of each task in the plurality of tasks │
│ in a case in which the task exclusively occupies a candidate resource scale     │ ～ 530
│ corresponding to the task, a target resource corresponding to each task in the  │
│ plurality of tasks                                                              │
└─────────────────────────────────────────────────────────────┘
```

FIG. 5

EP 4 625 168 A1

## Description

This application claims priority to Chinese Patent Application No. 202211624304.6, with the China National Intellectual Property Administration on December 16, 2022 and entitled "RESOURCE ALLOCATION METHOD AND APPARATUS", which is incorporated herein by reference in its entirety.

## TECHNICAL FIELD

Embodiments of this application relate to the field of data processing technologies, and more specifically, to a resource allocation method and apparatus.

## BACKGROUND

Computing power resource allocation is one of important factors that affect running performance of a task. In some schemes, a computing power resource allocation scheme is determined according to a general algorithm. However, in the general algorithm, a characteristic of the task cannot be perceived, in other words, computing power resources cannot be allocated based on characteristics of different tasks, and it is difficult to implement optimal matching between the task and the computing power resource. In some other schemes, the computing power allocation scheme is determined by a user. For example, the user specifies a computing power resource required by a task, or the user customizes a computing power resource allocation scheme for a task. However, a manner for manually determining the resource allocation scheme has a high requirement on the user, efficiency of the manner is low, and it is difficult to meet a running requirement.

How to implement computing power resource allocation becomes an urgent problem to be resolved.

## SUMMARY

Embodiments of this application provide a resource allocation method and apparatus, to help allocate proper computing power resources to a plurality of tasks, thereby improving overall running performance of the plurality of tasks.

According to a first aspect, a resource allocation method is provided, including: obtaining running performance data of each task in a plurality of tasks, where the running performance data of each task in the plurality of tasks includes running performance of the task in a sample resource scale corresponding to the task; determining, based on the running performance data of each task in the plurality of tasks, running performance of each task in the plurality of tasks in a case in which the task exclusively occupies candidate resource scales corresponding to the plurality of tasks; and determining, based on the running performance of each task in the plurality of tasks in a case in which the task exclusively occupies a candidate resource scale corresponding to the task, a target resource corresponding to each task in the plurality of tasks.

In the solution in this embodiment of this application, task analysis may be performed based on running performance data of the plurality of tasks, to identify behavior characteristics of the tasks, for example, running performance of the tasks in a case in which the tasks exclusively occupy resources, and a target resource corresponding to each task in the plurality of tasks is determined based on the behavior characteristic of the task. This helps improve a degree of matching between the task and the resource, thereby improving overall running performance of the plurality of tasks.

For example, the running performance of the task may include running time of the task, a response delay of the task, resource utilization of the task, data collected via a hardware performance monitoring unit (performance monitoring unit, PMU) counter, or the like.

Running performance of one task in one resource scale may include at least one of the following: running performance of the task in a case in which the task exclusively occupies the resource scale, and running performance of the task in a case in which the task does not exclusively occupy the resource scale.

The sample resource scale corresponding to each task may include one sample resource scale, or may include a plurality of sample resource scales.

Sample resource scales corresponding to different tasks may be the same or may be different.

For example, the resource may include a process resource. One unit resource may be one process. The resource scale may be a quantity of processes.

With reference to the first aspect, in some implementations of the first aspect, running performance data of at least one task in the plurality of tasks includes running performance of the at least one task in a case in which the at least one task does not exclusively occupy a sample resource scale corresponding to the at least one task.

In an actual application scenario, a task generally does not exclusively occupy a resource. In the solution in this embodiment of this application, the running performance of the task in a case in which the task exclusively occupies the resource may be determined based on the running performance of the task in a case in which the task does not exclusively occupy the resource, thereby reducing a limitation on the running performance data of the plurality of tasks. In the solution in this embodiment of this application, the obtained running performance of the plurality of tasks may include the running performance of the task in a case in which the task exclusively occupies the resource, and may further include the running performance of the task in a case in which the task does not exclusively occupy the resource. This increases a data amount of the obtained running performance data, and lays a data basis for a subsequent processing process, thereby helping more accurately analyze the plurality of tasks and implementing proper resource allocation.

With reference to the first aspect, in some implementations of the first aspect, the target resource corresponding to each task includes one or more processes corresponding to the task, and the one or more processes are separately bound to one or more resource slots (slot).

The slot may one-to-one correspond to a processor core. That the one or more processes are separately bound to one or more slots may also be understood as that the one or more processes are separately bound to one or more processor cores.

In the solution in this embodiment of this application, the process is bound to the slot, so that allocation of the process can be globally implemented, that is, allocation of the slot is globally implemented, thereby helping obtain an optimal resource allocation scheme. In addition, in the solution in this embodiment of this application, the process is bound to the slot, so that refined computing power allocation is implemented, and secondary scheduling of a computing power node kernel is not required. In other words, a computing power node does not need to schedule a processor core for the process, thereby avoiding overheads caused by secondary scheduling.

With reference to the first aspect, in some implementations of the first aspect, the plurality of processes are a plurality of consecutive processes, and the plurality of slots are a plurality of consecutive slots.

That the plurality of slots are a plurality of consecutive slots means that numbers of the plurality of slots are consecutive.

In this embodiment of this application, the consecutive slots are allocated to the tasks, so that communication costs during execution of the tasks are reduced, and the running performance of the tasks is further improved.

With reference to the first aspect, in some implementations of the first aspect, the plurality of tasks include a first task, and determining, based on running performance data of the first task, running performance of the first task in a case in which the first task exclusively occupies a candidate resource scale corresponding to the first task includes: constructing a first performance model of the first task based on the running performance data of the first task, where the first performance model of the first task is used to predict running performance of the first task in a case in which the first task exclusively occupies a resource scale input into the performance model of the first task; and determining, based on the first performance model of the first task, running performance of the first task in a case in which the first task exclusively occupies a first candidate resource scale corresponding to the first task, where the candidate resource scale corresponding to the first task includes the first candidate resource scale corresponding to the first task.

The first task may be any task in the plurality of tasks.

In this embodiment of this application, performance modeling is performed on a task based on running performance data of the task. This helps implement accurate performance analysis on the task, and provides a basis for proper allocation of subsequent computing power resources.

With reference to the first aspect, in some implementations of the first aspect, the plurality of tasks include a second task, and determining, based on running performance data of the second task, running performance of the second task in a case in which the second task exclusively occupies a candidate resource scale corresponding to the second task includes: determining, based on a fluctuation coefficient model of the second task and running performance data of the second task, running performance of the second task in a case in which the second task exclusively occupies a second candidate resource scale corresponding to the second task. The candidate resource scale corresponding to the second task includes the second candidate resource scale corresponding to the second task. The running performance data of the second task includes running performance of the second task in a sample resource allocation scheme corresponding to the second task. The second candidate resource scale is a sample resource scale indicated by the sample resource allocation scheme corresponding to the second task. The fluctuation coefficient model of the second task is used to predict a fluctuation coefficient that is of the second task and that corresponds to a resource allocation scheme input into the fluctuation coefficient model of the second task. The fluctuation coefficient that is of the second task and that correspond to the sample resource allocation scheme corresponding to the second task indicates a difference between the running performance of the second task in the sample resource allocation scheme corresponding to the second task and running performance of the second task in a case in which the second task exclusively occupies a sample resource scale corresponding to the second task.

In the solution in this embodiment of this application, performance inverse resolution is performed on the running performance data of the task in the sample resource allocation scheme based on the fluctuation coefficient of the task, to predict the running performance of the task in a case in which the task exclusively occupies the resource. This helps implement accurate performance analysis on each task, and provides a basis for proper allocation of subsequent computing power resources.

With reference to the first aspect, in some implementations of the first aspect, the candidate resource scale

**EP 4 625 168 A1**

corresponding to each task is a part of candidate resource scales corresponding to the task, and the part of the candidate resource scales corresponding to the task and running performance of each task in a case in which the task exclusively occupies the part of all the candidate resource scales corresponding to the task meet a first preset condition.

In the solution in this embodiment of this application, the partial resource scale may be determined from the candidate resource scales based on the first preset condition, so that a quantity of candidate resource scale combinations is reduced, that is, search space in a subsequent target resource allocation process is reduced, thereby improving resource allocation efficiency. Specifically, the partial resource scale is determined based on the resource scale and the running performance of the task in a case in which the task exclusively occupies the resource scale corresponding to the task. This helps avoid a waste of resources caused by allocating excessive resources to the task in subsequent resource allocation.

With reference to the first aspect, in some implementations of the first aspect, the first preset condition includes: a ratio of the running performance of each task in a case in which the task exclusively occupies the part of the candidate resource scales corresponding to the task to the part of the candidate resource scales corresponding to the task is greater than or equal to a first threshold, where the first threshold is a threshold of utilization efficiency of the task on the resource scale.

In the solution in this embodiment of this application, the partial resource scale may be determined based on a ratio, that is, resource efficiency of a task, of running performance of the task in a case in which the task exclusively occupies a resource scale corresponding to the task to the resource scale, and a candidate resource scale corresponding to high resource efficiency is used as the partial candidate resource scale, to avoid a waste of resources caused by allocating excessive resources to the task in subsequent resource allocation.

With reference to the first aspect, in some implementations of the first aspect, the determining, based on the running performance of each task in the plurality of tasks in a case in which the task exclusively occupies the candidate resource scale corresponding to the task, a target resource corresponding to each task in the plurality of tasks includes: determining target candidate resource allocation schemes in a plurality of resource scale combinations based on the running performance of each task in the plurality of tasks in a case in which the task exclusively occupies the part of the candidate resource scales corresponding to the task, where the plurality of resource scale combinations are determined based on a combination of the part of the candidate resource scales corresponding to the task, and a target candidate resource allocation scheme in each resource scale combination in the plurality of resource scale combinations indicates a target candidate resource corresponding to each task in the plurality of tasks in the resource scale combination; determining fluctuation coefficients that are of a plurality of tasks that correspond to the target candidate resource allocation scheme in each resource scale combination in the plurality of resource scale combinations, where the fluctuation coefficients that are of the plurality of tasks and that correspond to the target candidate resource allocation scheme in each resource scale combination respectively indicate differences between running performance of the plurality of tasks in parallel execution in the target candidate resource allocation scheme in each resource scale combination and running performance of the plurality of tasks in a case in which the plurality of tasks exclusively occupy resource scales corresponding to the tasks in each resource scale combination; predicting, based on the fluctuation coefficients that are of the plurality of tasks and that correspond to the target candidate resource allocation scheme in each resource scale combination, the running performance of the plurality of tasks in parallel execution in the target candidate resource allocation scheme in each resource scale combination; and determining, from the target candidate resource allocation schemes in the plurality of resource scale combinations, the target resource corresponding to each task in the plurality of tasks based on running performance of the plurality of tasks in parallel execution in the target candidate resource allocation schemes in the plurality of resource scale combinations.

In the solution in this embodiment of this application, the target candidate resource allocation schemes in the resource scale combinations are determined based on the running performance of the plurality of tasks in a case in which the plurality of tasks exclusively occupy the resources, and the fluctuation coefficients of the tasks are calculated based on the target candidate resource allocation schemes, to determine the running performance of the plurality of tasks in parallel execution, and further determine the target resource corresponding to each task in the plurality of tasks. In this way, enumeration of all resource allocation schemes in all resource scale combinations can be avoided, thereby greatly reducing a computing amount and improving computing power resource efficiency. **In** addition, in the solution in this embodiment of this application, the running performance of the tasks in parallel execution is restored based on the fluctuation coefficients, which is more practical to an actual running status. This helps improve prediction accuracy of the overall performance, thereby further improving properness of resource allocation.

With reference to the first aspect, in some implementations of the first aspect, the determining target candidate resource allocation schemes in a plurality of resource scale combinations based on the running performance of each task in the plurality of tasks in a case in which the task exclusively occupies the part of the candidate resource scales corresponding to the task includes: determining, from candidate resource allocation schemes in each resource scale combination, the target candidate resource allocation scheme in each resource scale combination based on the running performance of each task in the plurality of tasks in a case in which the task exclusively occupies the part of the candidate

4

resource scales corresponding to the task, where candidate resources that correspond to each task and that are indicated by the candidate resource allocation schemes in each resource scale combination are consecutive, and overall running performance of the plurality of tasks in a case in which the plurality of tasks exclusively occupy the resource scales corresponding to the tasks in each resource scale combination in the target candidate resource allocation scheme in the resource scale combination is better than overall running performance of the plurality of tasks in a case in which the plurality of tasks exclusively occupy resource scales corresponding to the tasks in each resource scale combination in another candidate resource allocation scheme in the resource scale combination.

With reference to the first aspect, in some implementations of the first aspect, the determining fluctuation coefficients that are of a plurality of tasks that correspond to the target candidate resource allocation scheme in each resource scale combination in the plurality of resource scale combinations includes: constructing fluctuation coefficient models of the plurality of tasks based on running performance data of the plurality of tasks, where the fluctuation coefficient models of the plurality of tasks are respectively used to predict fluctuation coefficients that are of the plurality of tasks and that correspond to resource allocation schemes input into the fluctuation coefficient models of the plurality of tasks; and respectively determining, based on the fluctuation coefficient models of the plurality of tasks, the fluctuation coefficients that are of the plurality of tasks and that correspond to the target candidate resource allocation scheme in each resource scale combination in the plurality of resource scale combinations.

With reference to the first aspect, in some implementations of the first aspect, the plurality of tasks include tasks corresponding to a plurality of applications, and each task in the plurality of applications corresponds to one task.

With reference to the first aspect, in some implementations of the first aspect, the plurality of tasks include tasks corresponding to a plurality of functional modules in one application, and each functional module in the plurality of functional modules corresponds to one task.

According to a second aspect, a resource allocation apparatus is provided, including an obtaining unit, configured to obtain running performance data of each task in a plurality of tasks, where the running performance data of each task in the plurality of tasks includes running performance of the task in a sample resource scale corresponding to the task; and a processing unit, configured to: determine, based on the running performance data of each task in the plurality of tasks, running performance of each task in the plurality of tasks in a case in which the task exclusively occupies a candidate resource scale corresponding to the task; and determine, based on the running performance of each task in the plurality of tasks in a case in which the task exclusively occupies the candidate resource scale corresponding to the task, a target resource corresponding to each task in the plurality of tasks.

With reference to the second aspect, in some implementations of the second aspect, the target resource corresponding to each task includes one or more processes corresponding to the task, and the one or more processes are separately bound to one or more slots.

With reference to the second aspect, in some implementations of the second aspect, the plurality of processes are a plurality of consecutive processes, and the plurality of slots are a plurality of consecutive slots.

With reference to the second aspect, in some implementations of the second aspect, the plurality of tasks include a first task, and the processing unit is specifically configured to: construct a first performance model of the first task based on the running performance data of the first task, where the first performance model of the first task is used to predict running performance of the first task in a case in which the first task exclusively occupies a resource scale input into the performance model of the first task; and determine, based on the first performance model of the first task, running performance of the first task in a case in which the first task exclusively occupies a first candidate resource scale corresponding to the first task, where the candidate resource scale corresponding to the first task includes the first candidate resource scale corresponding to the first task.

With reference to the second aspect, in some implementations of the second aspect, the processing unit is specifically configured to: the candidate resource scale corresponding to each task is a part of all candidate resource scales corresponding to the task, and the part of the candidate resource scales corresponding to the task and running performance of each task in a case in which the task exclusively occupies the part of the candidate resource scales corresponding to the task meet a first preset condition.

With reference to the second aspect, in some implementations of the second aspect, the first preset condition includes: a ratio of the running performance of each task in a case in which the task exclusively occupies the part of the candidate resource scales corresponding to the task to the part of the candidate resource scales corresponding to the task is greater than or equal to a first threshold, where the first threshold is a threshold of utilization efficiency of the task on the resource scale.

With reference to the second aspect, in some implementations of the second aspect, the processing unit is specifically configured to: determine target candidate resource allocation schemes in a plurality of resource scale combinations based on the running performance of each task in the plurality of tasks in a case in which the task exclusively occupies the part of the candidate resource scales corresponding to the task, where the plurality of resource scale combinations are determined based on a combination of the part of the candidate resource scales corresponding to the task, and a target candidate resource allocation scheme in each resource scale combination in the plurality of resource scale combinations indicates a target candidate resource corresponding to each task in the plurality of tasks in the resource scale combination; determine fluctuation coefficients that are of a plurality of tasks that correspond to the target candidate resource allocation scheme in each resource scale combination in the plurality of resource scale combinations, where the fluctuation coefficients that are of the plurality of tasks and that correspond to the target candidate resource allocation scheme in each resource scale combination respectively indicate differences between running performance of the plurality of tasks in parallel execution in the target candidate resource allocation scheme in each resource scale combination and running performance of the plurality of tasks in a case in which the plurality of tasks exclusively occupy resource scales corresponding to the tasks in each resource scale combination; predict, based on the fluctuation coefficients that are of the plurality of tasks and that correspond to the target candidate resource allocation scheme in each resource scale combination, the running performance of the plurality of tasks in parallel execution in the target candidate resource allocation scheme in each resource scale combination; and determine, from the target candidate resource allocation schemes in the plurality of resource scale combinations, the target resource corresponding to each task in the plurality of tasks based on running performance of the plurality of tasks in parallel execution in the target candidate resource allocation schemes in the plurality of resource scale combinations.

With reference to the second aspect, in some implementations of the second aspect, the processing unit is specifically configured to: determine, from candidate resource allocation schemes in each resource scale combination, the target candidate resource allocation scheme in each resource scale combination based on the running performance of each task in the plurality of tasks in a case in which the task exclusively occupies the part of the candidate resource scales corresponding to the task, where candidate resources that correspond to each task and that are indicated by the candidate resource allocation schemes in each resource scale combination are consecutive, and overall running performance of the plurality of tasks in a case in which the plurality of tasks exclusively occupy the resource scales corresponding to the tasks in each resource scale combination in the target candidate resource allocation scheme in the resource scale combination is better than overall running performance of the plurality of tasks in a case in which the plurality of tasks exclusively occupy resource scales corresponding to the tasks in each resource scale combination in another candidate resource allocation scheme in the resource scale combination.

With reference to the second aspect, in some implementations of the second aspect, the processing unit is specifically configured to: construct fluctuation coefficient models of the plurality of tasks based on running performance data of the plurality of tasks, where the fluctuation coefficient models of the plurality of tasks are respectively used to predict fluctuation coefficients that are of the plurality of tasks and that correspond to resource allocation schemes input into the fluctuation coefficient models of the plurality of tasks; and respectively determine, based on the fluctuation coefficient models of the plurality of tasks, the fluctuation coefficients that are of the plurality of tasks and that correspond to the target candidate resource allocation scheme in each resource scale combination in the plurality of resource scale combinations.

With reference to the second aspect, in some implementations of the second aspect, the plurality of tasks include tasks corresponding to a plurality of applications, and each task in the plurality of applications corresponds to one task.

With reference to the second aspect, in some implementations of the second aspect, the plurality of tasks include tasks corresponding to a plurality of functional modules in one application, and each functional module in the plurality of functional modules corresponds to one task.

It should be understood that extensions, definitions, explanations, and descriptions of related content in the first aspect are also applicable to same content in the second aspect.

According to a third aspect, a resource allocation apparatus is provided, including a processor and a memory, and optionally, further including an input/output interface. The processor is configured to control the input/output interface to receive and send information. The memory is configured to store a computer program. The processor is configured to invoke the computer program from the memory and run the computer program, so that the apparatus performs the method in any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fourth aspect, a computing device cluster is provided, including at least one computing device, and each computing device includes a processor and a memory. The processor of the at least one computing device is configured to execute instructions stored in the memory in the at least one computing device, to enable the computing device cluster to perform the method in any one of the first aspect and the implementations of the first aspect.

According to a fifth aspect, a computer-readable medium is provided, including computer program instructions. When the computer program instructions are executed by a computing device cluster, the computing device cluster performs the method in any one of the first aspect and the implementations of the first aspect.

According to a sixth aspect, a computer program product including instructions is provided. When the instructions are run by a computing device cluster, the computing device cluster is enabled to perform the method in any one of the first aspect or the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrical EPROM (electrical EPROM, EEPROM), and a hard drive (hard drive).

Optionally, in an implementation, the foregoing storage medium may be specifically a non-volatile storage medium.

**BRIEF DESCRIPTION OF DRAWINGS**

FIG. 1 is a diagram of different levels of computing power resource allocation;
FIG. 2 is a diagram of a computing power resource allocation method;
FIG. 3 is a diagram of a computing power resource allocation method according to an embodiment of this application;
FIG. 4 is a block diagram of a resource allocation apparatus according to an embodiment of this application;
FIG. 5 is a schematic flowchart of a resource allocation method according to an embodiment of this application;
FIG. 6 is a schematic flowchart of another resource allocation method according to an embodiment of this application;
FIG. 7 is a diagram of a processing procedure of a performance matrix according to an embodiment of this application;
FIG. 8 is a diagram of a processing procedure of a bin packing algorithm according to an embodiment of this application;
FIG. 9 is a diagram of a resource allocation scheme according to an embodiment of this application;
FIG. 10 is a diagram of another resource allocation scheme according to an embodiment of this application;
FIG. 11 is a block diagram of a resource allocation apparatus according to an embodiment of this application;
FIG. 12 is a block diagram of a computing device according to an embodiment of this application;
FIG. 13 is a block diagram of a computing device cluster according to an embodiment of this application; and
FIG. 14 is a block diagram of a connection relationship between computing devices according to an embodiment of this application.

**DESCRIPTION OF EMBODIMENTS**

The following describes technical solutions of embodiments in this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, "relevant (corresponding, relevant)" and "corresponding (corresponding)" may sometimes be mixed. It should be noted that meanings to be expressed by the two are consistent when a difference between them is not emphasized.

The service scenario described in embodiments of this application is intended to describe the technical solutions in embodiments of this application more clearly, and constitute no limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

To better describe the solutions in embodiments of this application, the following first describes terms that may be used in this application.

(1) Parallel application

Because the parallel application can significantly improve application performance, currently, the parallel application has become a mainstream mode of application development. With the increase of application parallelism, computing power resource scales required by the application increase rapidly.

The parallel application is one application inside which different functional components are executed in parallel. In addition, for one component, the component may also process different data at the same time, to implement parallelism inside the component.

The parallel application helps to use computing power resources properly, thereby improving running performance of the application.

Specifically, one application may be abstracted as an expanded computing graph, and clustered into several clusters, or may be referred to as a functional module. Each functional module may be configured to implement a function of a part of the application. Different functional modules can be executed at the same time.

In embodiments of this application, the module may also be referred to as a functional module, a component, a functional component, or a component module.

In contrast, communication inside the module is tight, and communication between modules is sparse.

(2) Task scheduling

Execution of one application can be abstracted as allocation of computing resources for tasks and maintenance of task execution.

For a parallel application, the application may be decomposed into a plurality of subtasks, and the plurality of subtasks may be allocated to different processors. The different processors may process the plurality of subtasks at the same time, to accelerate execution of the application.

(3) Performance matrix

A performance matrix of one application may indicate running performance of different functional modules in the application in different resource allocation scheme conditions. For example, the performance matrix may indicate time that needs to be consumed by the different functional modules to run in the different resource allocation scheme conditions.

The solutions in embodiments of this application can be applied to a scenario in which a plurality of tasks are executed in parallel.

In a possible implementation, the plurality of tasks may be a plurality of applications. The solutions in embodiments of this application can be used to allocate resources to the plurality of applications.

For example, one or more users may submit a plurality of job tasks to a computing system, for the system to centrally manage and run these tasks. The computing system may be referred to as a batch job processing system or a batch processing system. The solutions in embodiments of this application may be applied to the batch processing system, to allocate computing power resources to the plurality of job tasks.

For example, a plurality of users submit a plurality of job tasks. The plurality of job tasks have characteristics of high computing power consumption, long running time, and high parallelism. In this case, to maximize resource utilization of the system, the plurality of job tasks may be deployed on a limited quantity of computing nodes (for example, one computing node) as much as possible. According to the solutions in embodiments of this application, the plurality of job tasks may be deployed on a specified computing node, and overall running performance of the plurality of job tasks is optimized, for example, overall running time of the plurality of job tasks.

For another example, a plurality of users submit a plurality of job tasks. In a current system, resources that can be allocated to the plurality of job tasks are limited. According to the solutions in embodiments of this application, corresponding resources may be allocated to the plurality of job tasks in the limited resources, and overall performance of the plurality of job tasks is optimized, for example, overall running time of the plurality of job tasks.

In another possible implementation, the plurality of tasks may be a plurality of subtasks of one parallel application. The solutions in embodiments of this application may be applied to a resource allocation scenario of the parallel application, and are used to allocate computing power resources to the plurality of subtasks of the parallel application.

For example, the solutions in embodiments of this application may be applied to a parallel application scenario such as scientific computing or high performance computing (high performance computing, HPC).

The solutions in embodiments of this application are particularly applicable to a large-scale parallel application scenario, for example, a parallel application scenario such as large-scale scientific computing, big data processing, and large-scale graph computing.

For example, a community earth system model (community earth system model, CESM) is one of applications of high-performance computing and can be used to simulate long-term climate change. The system is formed by coupling modules responsible for subsystems. For example, the subsystems include an atmosphere (atmosphere, ATM) subsystem, an ocean (ocean, OCN) subsystem, a sea ice (sea ice, ICE) subsystem, a land (land, LND) subsystem, a river runoff (river runoff, ROF) subsystem, a land ice (land ice, GLC) subsystem, a sea wave (ocean wave, WAV) subsystem, and a coupler (coupler, CPL) subsystem. Data can be exchanged between the modules through a multipoint interface (multipoint interface, MPI). Running performance in the coupling mode is an important indicator for measuring HPC performance.

Computing power resource allocation is an important factor to improve running performance of the task.

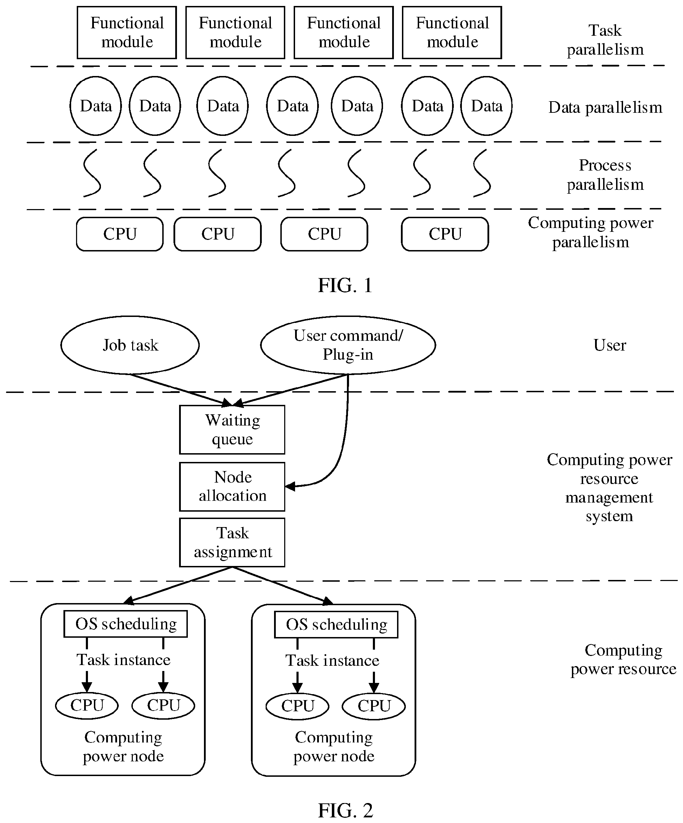

FIG. 1 is a diagram of different levels of computing power resource allocation. Four layers: an application layer, a data layer, a system execution layer, and a hardware computing power layer are generally considered during computing power resource allocation for a parallel application.

As shown in FIG. 1, at the application layer, a plurality of functional modules are abstracted from a function perspective. The plurality of functional modules respectively correspond to a plurality of tasks. The plurality of tasks may be processed in parallel, that is, task parallelism. There may be interaction relationships such as communication, cooperation, and dependency between the plurality of functional modules. At the data layer, processing data of a single functional module is divided into a plurality of groups from a perspective of data. The plurality of groups of data may be processed in parallel, that is, data parallelism. The plurality of groups of data may be synchronized or shared. At the system execution layer, an execution abstraction, for example, a process or a thread, provided by an operating system is included, and is used to bear and run a specific functional module to process a specific data group. A plurality of processes may be processed in parallel, that is, process parallelism. At the hardware computing power layer, a hardware unit that is specifically responsible for program running is included, that is, a computing resource, for example, the CPU shown in FIG. 1. One or more execution abstractions at the system execution layer are mapped to the computing resource, to finally complete allocation of computing power resources. Parallelism at the system execution layer is computing power parallelism.

In a related solution, a computing power resource allocation strategy is usually determined according to a general algorithm or determined by a user. However, in the general algorithm, a characteristic of the task cannot be perceived, that is, computing power resources cannot be allocated based on characteristics of different tasks, and it is difficult to implement optimal matching between the task and the computing power resource. A manner for manually determining the resource allocation scheme has a high requirement on the user, and efficiency of the manner is low, and it is difficult to meet a running requirement.

The following uses a computing power resource allocation method of a parallel application as an example for description. FIG. 2 is a schematic flowchart of a computing power resource allocation method.

As shown in FIG. 2, after a user submits a job, a job requirement of the user is obtained through a client interface. A computing power resource management system generates a waiting queue based on the job requirement of the user, and then allocates a computing power node to a plurality of tasks in the waiting queue. For example, the system may determine a computing power resource allocation strategy according to a general algorithm. Alternatively, as shown in FIG. 2, the user may indicate the computing power resource allocation strategy via a command, a plug-in, or the like. The system executes the computing power resource allocation strategy to implement node allocation. For example, the user may respectively specify different computing power resource allocation strategies for different applications, or customize computing power resource allocation strategies based on different applications, thereby improving adaptability between the computing power resource allocation strategy and the application. Specifically, the system delivers a plurality of task instances to the computing power node according to the computing power resource allocation strategy, and an operating system (operating system, OS) in the computing power node implements scheduling and computing of each task instance. The operating system in the computing power node schedules a processor in the computing power node to calculate each task instance, or the operating system in the computing power node allocates a processor (for example, the CPU in FIG. 2) to each task instance, to implement computing of each task instance.

In the foregoing solution, the computing power resource allocation strategy determined based on a general framework cannot perceive a behavior characteristic of the application, and it is difficult to implement optimal matching between the application and an underlying computing power resource. To further improve running performance of the application, the computing power resource allocation strategy needs to be manually specified or the computing power resource allocation strategy needs to be manually formulated. Consequently, efficiency is low and a requirement on the user is high.

In view of this, embodiments of this application provide a resource allocation method, to help allocate proper computing power resources to a plurality of tasks, thereby improving overall running performance of the plurality of tasks.

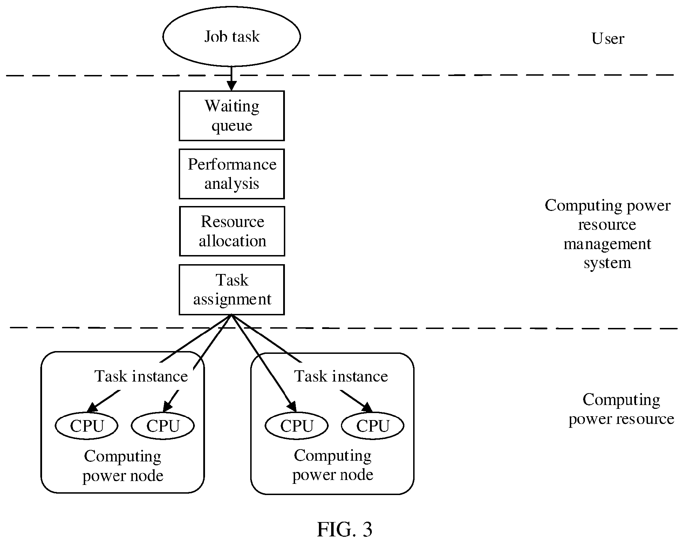

FIG. 3 is a schematic flowchart of a computing power resource allocation method according to an embodiment of this application.

As shown in FIG. 3, after a user submits a job, a job requirement of the user can be obtained through a client interface. A computing power resource management system generates a waiting queue based on the job requirement of the user, and then allocates a resource to a plurality of tasks in the waiting queue. The system collects data to obtain running performance data of the plurality of tasks. Performance analysis is performed on the plurality of tasks based on the running performance data of the plurality of tasks, and resource allocation is implemented based on a result of the performance analysis.

For example, the system may globally perform resource allocation to implement fine-grained resource allocation. For example, as shown in FIG. 3, CPU-level computing power allocation is implemented. The system can allocate a task instance to a corresponding processor. Compared with FIG. 2, a computing power node does not need to schedule the processor to implement the task instance, thereby avoiding overheads caused by secondary scheduling.

It should be understood that a resource allocation granularity in FIG. 3 is merely an example, and the resource allocation granularity may alternatively be another granularity. In FIG. 3, that the CPU is used as the processor is merely an example, and constitutes no limitation on the solutions in embodiments of this application. In another implementation, another processor may alternatively be used.

For specific descriptions of resource allocation, refer to the following method 500.

To better describe the solutions in embodiments of this application, the following first describes a resource allocation apparatus in embodiments of this application.

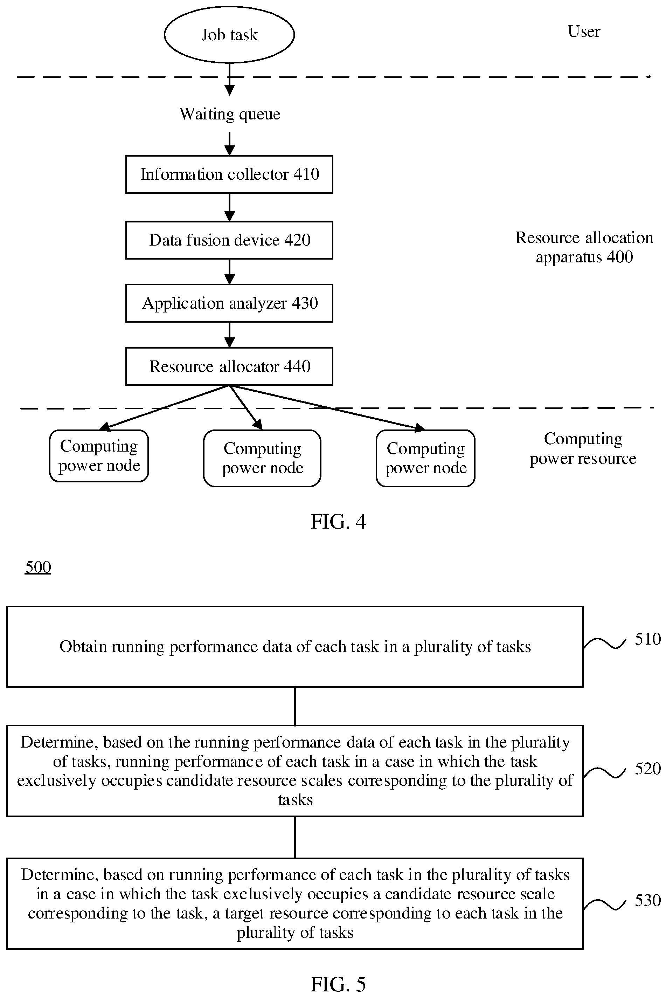

FIG. 4 is a block diagram of a resource allocation apparatus 400 according to an embodiment of this application. For example, the resource allocation apparatus 400 may be deployed in the computing power resource management system shown in FIG. 3.

As shown in FIG. 4, the resource allocation apparatus 400 may include an information collector 410, a data fusion device 420, an application analyzer 430, and a resource allocator 440.

A waiting queue may be generated based on a job task submitted by a user. The resource allocation apparatus 400 may allocate computing power resources to a plurality of tasks in the waiting queue.

The information collector 410 is configured to obtain information about the plurality of tasks and information about an available resource.

Further, the information collector 410 may be further configured to obtain user information.

The data fusion device 420 is configured to obtain running performance data of the plurality of tasks.

The application analyzer 430 is configured to analyze performance characteristics of the plurality of tasks based on the running performance data of the plurality of tasks.

Specifically, the application analyzer 430 may be configured to predict, based on the running performance data of the plurality of tasks, running performance of the plurality of tasks in a case in which the plurality of tasks exclusively occupy resources.

The resource allocator 440 is configured to predict overall running performance of the plurality of tasks in different resource allocation schemes based on the performance characteristics of the plurality of tasks, to determine a target resource allocation scheme.

A task instance may be allocated, based on the target resource allocation scheme, to a corresponding target resource for processing.

For example, the target resource allocation scheme may indicate processes corresponding to the plurality of tasks. A process can be bound to a hardware processing unit. In this way, the task instance may be allocated to a corresponding hardware unit.

The following describes the resource allocation apparatus 400 by using an example in which the plurality of tasks are a plurality of subtasks of a parallel application.

A waiting queue may be generated based on an application submitted by a user. A plurality of tasks in the waiting queue include a plurality of subtasks corresponding to the application. The resource allocation apparatus 400 may allocate computing power resources to the plurality of tasks in the waiting queue.

The information collector 410 is configured to obtain related information of the application. The related information of the application includes information about the plurality of tasks of the application and information about an available resource.

Further, the information collector 410 may be further configured to obtain user information.

The data fusion device 420 is configured to obtain running performance data of a plurality of application instances of the application. The running performance data of the plurality of application instances includes the running performance data of the plurality of tasks.

The application analyzer 430 is configured to analyze a performance characteristic of the application based on the running performance data of the plurality of application instances.

Specifically, the application analyzer 430 may be configured to predict, based on the running performance data of the plurality of application instances, running performance of the plurality of tasks in a case in which the plurality of tasks exclusively occupy resources.

The resource allocator 440 is configured to predict overall running performance of the application in different resource allocation schemes based on the performance characteristic of the application, to determine a target resource allocation scheme.

A task instance may be allocated, based on the target resource allocation scheme, to a corresponding target resource for processing.

It should be understood that the resource allocation apparatus shown in FIG. 4 is merely an example, and constitutes no limitation on the solutions in embodiments of this application.

FIG. 5 is a schematic flowchart of a computing power resource allocation method according to an embodiment of this application. The method 500 shown in FIG. 5 may be performed by a resource allocation apparatus. For example, the method shown in FIG. 5 may be performed by the apparatus 400 shown in FIG. 4.

As shown in FIG. 5, the method 500 includes the following steps.

510: Obtain running performance data of each task in a plurality of tasks. The running performance data of each task in the plurality of tasks includes running performance of the task in a sample resource scale corresponding to the task.

520: Determine, based on the running performance data of each task in the plurality of tasks, running performance of each task in a case in which the task exclusively occupies candidate resource scales corresponding to the plurality of tasks.

530: Determine, based on the running performance of each task in the plurality of tasks in a case in which the task exclusively occupies a candidate resource scale corresponding to the task, a target resource corresponding to each task in the plurality of tasks.

In other words, step 530 may be understood as determining a target resource allocation scheme based on running performance of the plurality of tasks in a case in which the plurality of tasks exclusively occupy candidate resource scales corresponding to the plurality of tasks. The target resource allocation scheme indicates the target resource corresponding to each task in the plurality of tasks.

In the solution in this embodiment of this application, task analysis may be performed based on running performance data of the plurality of tasks, to identify behavior characteristics of the tasks, for example, running performance of the tasks in a case in which the tasks exclusively occupy resources, and a target resource corresponding to each task in the plurality of tasks is determined based on the behavior characteristic of the task. This helps improve a degree of matching between the task and the resource, thereby improving overall running performance of the plurality of tasks.

Optionally, the method 500 may further include step 501 (not shown in the figure).

501: Obtain information about the plurality of tasks and information about an available resource.

For example, step 501 may be performed by the information collector 410 in FIG. 4.

The information about the plurality of tasks may indicate the plurality of tasks or a quantity of the plurality of tasks.

The information about the available resource may indicate the available resource or a scale of the available resource. For example, the information about the available resource may be represented by a hardware parameter.

For example, the scale of the available resource may be a quantity of available computing power nodes.

For example, the computing power node may be a terminal device. For another example, the computing power node may be a server.

For example, the scale of the available resource may be a quantity of available processors.

For example, the processor may include any one or more of processors such as a central processing unit (central processing unit, CPU), a graphics processing unit (graphics processing unit, GPU), or a digital signal processor (digital signal processor, DSP).

For example, the scale of the available resource may be a quantity of available processor cores.

For example, the processor is a CPU, and the processor core is a CPU core.

In addition, the method 500 may further include: obtaining other information related to resource allocation of the plurality of tasks, for example, information about a user who submits the plurality of tasks.

Optionally, the plurality of tasks include tasks corresponding to a plurality of applications.

In other words, the plurality of tasks may one-to-one correspond to the plurality of applications, that is, each application may correspond to one task.

For example, the plurality of applications may be indicated by at least one user.

For example, the plurality of tasks may include a compression task submitted by a user #1, and a data processing task and a compression task that are submitted by a user #2. In other words, the plurality of tasks may include two compression tasks and one data processing task.

One or more users may submit a plurality of job tasks to a computing system, for the system to centrally manage and run these tasks. The computing system may be referred to as a batch job processing system or a batch processing system. The solutions in embodiments of this application may be applied to a resource allocation scenario of the batch processing system, to allocate computing power resources to the plurality of job tasks.

Optionally, the plurality of tasks include tasks corresponding to a plurality of functional modules in one application.

In other words, the plurality of tasks may include a plurality of subtasks of one application. Each functional module corresponds to one task. The application is a parallel application.

For example, the plurality of tasks may include tasks corresponding to functional modules responsible for ATM, OCN, and ICE in the CESM.

The user may submit an application task to the computing system. The application is the parallel application. The solutions in embodiments of this application may be applied to a resource allocation scenario of the parallel application, and are used to allocate computing power resources to the plurality of subtasks of the parallel application. For specific descriptions about that the solutions in embodiments of this application are applied to the resource allocation scenario of the parallel application, refer to the following method 600.

It should be understood that the foregoing is merely an example, and constitutes no limitation on the plurality of tasks in embodiments of this application, provided that the plurality of tasks can be executed in parallel. For example, the plurality of tasks may include a task corresponding to an application #1 and tasks corresponding to a plurality of functional modules in an application #2. The application #1 may be a non-parallel application, and the application #2 may be a parallel application.

For example, the running performance of the task may include running time of the task, a response delay of the task, resource utilization of the task, data collected via a hardware performance monitoring unit (performance monitoring unit, PMU) counter, or the like.

Running performance of one task in one resource scale may include at least one of the following: running performance of the task in a case in which the task exclusively occupies the resource scale, and running performance of the task in a case in which the task does not exclusively occupy the resource scale.

That the task exclusively occupies the resource scale refers to that a resource allocated to the task is exclusively occupied by the task.

That the task does not exclusively occupy the resource scale refers to that at least a part of resources allocated to the task is shared with another task. In other words, the task and the another task that shares at least the part of resources with the task are executed in parallel.

That one task exclusively occupies a resource scale corresponding to the task may be understood as that only the task is executed on a resource corresponding to the task. Correspondingly, that one task does not exclusively occupy a resource scale corresponding to the task may be understood as that the task and another task are executed at the same time on a resource corresponding to the task. Alternatively, the task and another task contend for a resource corresponding to the task. For ease of description, in embodiments of this application, that the task exclusively occupies the resource scale corresponding to the task is referred to as that the task exclusively occupies the resource for short, and that the task does not exclusively occupy the resource scale corresponding to the task is referred to as that the task does not exclusively occupy the resource or that the task does not exclusively occupy the resource for short.

Optionally, running performance data of at least one task in the plurality of tasks includes running performance of the at least one task in a case in which the at least one task does not exclusively occupy a sample resource scale corresponding to the at least one task.

In an actual application scenario, a task generally does not exclusively occupy a resource. In the solution in this embodiment of this application, the running performance of the task in a case in which the task exclusively occupies the resource may be determined based on the running performance of the task in a case in which the task does not exclusively occupy the resource, thereby reducing a limitation on the running performance data of the plurality of tasks. In the solution in this embodiment of this application, the obtained running performance of the plurality of tasks may include the running performance of the task in a case in which the task exclusively occupies the resource, and may further include the running performance of the task in a case in which the task does not exclusively occupy the resource. This increases a data amount of the obtained running performance data, and lays a data basis for a subsequent processing process, thereby helping more accurately analyze the plurality of tasks and implementing proper resource allocation.

Further, when the plurality of tasks include tasks corresponding to a plurality of functional modules in one application, step 510 may include: obtaining running performance data of a plurality of application instances of the application. The running performance data of the plurality of application instances includes the running performance data of the plurality of tasks.

Running performance data of each application instance may include running performance data of a part or all of the plurality of tasks.

The sample resource scale corresponding to each task may include one sample resource scale, or may include a plurality of sample resource scales.

In other words, the running performance data of each task includes running performance of the task in at least one sample resource scale.

Sample resource scales corresponding to different tasks may be the same or may be different.

The following describes an example of a manner for determining the sample resource scale corresponding to the task.

For example, the sample resource scale corresponding to the task may be determined by a user.

Alternatively, the sample resource scale corresponding to the task may be randomly generated.

Alternatively, the sample resource scale corresponding to the task may be generated based on a default resource scale corresponding to the task.

For example, the default resource scale corresponding to the task may be a resource scale preset for the task. For another example, the default resource scale corresponding to the task may be determined according to a general algorithm.

For example, the sample resource scale corresponding to the task may include the default resource scale corresponding to the task and a resource scale selected from a resource scale around the default resource scale. The resource scale around the default resource scale may be a resource scale whose difference from the default resource scale is less than or equal to a scale threshold. For example, if the default resource scale is five processes, and the scale threshold is 3, a resource scale around the default resource scale is a resource scale in a range [2, 8]. A part or all of the resource scale is selected as the sample resource scale together with the default resource scale. The scale threshold may be a preset fixed value. Alternatively, the scale threshold may be a value determined based on the default resource scale. This is not limited in embodiments of this application.

It should be understood that the foregoing is merely an example, and the sample resource scale corresponding to the task may be alternatively determined in another manner.

For different tasks, manners for determining sample resource scales corresponding to the tasks may be the same or may be different.

In embodiments of this application, the resource may also be referred to as computing power, a computing power resource, or a computing resource.

For example, the resource may include a process resource. One unit resource may be one process. The resource scale may be a quantity of processes.

The resource allocation scheme indicates a resource corresponding to the task, that is, a resource allocated to the task. Resource allocation schemes in different resource scales are different. That the running performance data of each task includes running performance of the task in at least one sample resource scale may be understood in the following manner: The running performance data of each task includes the running performance of the task in the at least one sample resource allocation scheme, and a resource scale that corresponds to the task and that is indicated by the at least one sample resource allocation scheme includes at least one resource scale.

For example, resources indicated by the sample resource allocation scheme for the task may be consecutive. For example, processes indicated by the sample resource allocation scheme for the task may be consecutive. The process allocated to the task may be represented by an ID of a start process and an ID of an end process that are allocated to the task. Alternatively, the process allocated to the task may be represented by an ID of a start process allocated to the task and a quantity of processes allocated to the task. Alternatively, the process allocated to the task may be represented by another parameter.

For example, step 510 may be performed by the data fusion device 420 in FIG. 4.

The following describes an example of a manner for obtaining the running performance data of the task.

For example, the running performance data of the task is obtained from historical running data of the task.

For example, running data in a sample resource scale corresponding to the task is collected from the historical running data of the task.

Alternatively, the running performance data of the task is obtained from monitoring data of a task instance that is running.

For example, if the task instance that is currently running is in the sample resource scale corresponding to the task, running performance of the task instance may be obtained from the monitoring data as the running performance data of the task.

Alternatively, the task is pre-executed in the sample resource scale corresponding to the task.

A resource is allocated to the task based on the sample resource scale corresponding to the task, the task is pre-executed for a period of time under the resource, and the running performance data of the task is obtained from the monitoring data.

Running performance data of one task may be obtained in any one of the foregoing manners, or may be jointly obtained in a plurality of manners. For example, for different sample resource scales corresponding to one task, corresponding running performance may be collected in different manners.

Methods for obtaining running performance data of different tasks may be the same or may be different.

It should be understood that the foregoing manner for obtaining the running performance data of the task is merely an example, and constitutes no limitation on the solutions in embodiments of this application.

For example, step 520 may be performed by the application analyzer 430 in FIG. 4.

For example, in step 520, for one task, running performance of the task in a case in which the task exclusively occupies a candidate resource scale corresponding to the task may be determined based on running performance data of the task.

A sample resource scale corresponding to one task may be the same as or different from a candidate resource scale corresponding to the task.

A candidate resource scale corresponding to each task may include one candidate resource scale, or may include a plurality of candidate resource scales.

For different tasks, candidate resource scales corresponding to the tasks may be the same or may be different.

For example, the plurality of tasks may include a task #1 and a task #2. A candidate resource scale corresponding to the task #1 includes two unit resources and three unit resources. A candidate resource scale corresponding to the task #2 includes two unit resources. In step 520, running performance of the task #1 in a case in which the task #1 exclusively occupies the three unit resources and running performance of the task #1 in a case in which the task #1 exclusively occupies the two unit resources may be determined based on running performance data of the task #1, and running performance of the task #2 in a case in which the task #2 exclusively occupies the two unit resources is determined based on running performance data of the task #2.

The following describes step 520 by using three examples (Example 1, Example 2, and Example 3).

Example 1:

Optionally, the plurality of tasks may be a first task. A first performance model of the first task is constructed based on running performance data of the first task, where the first performance model of the first task is used to predict running performance of the first task in a case in which the first task exclusively occupies a resource scale input into the first performance model of the first task; and running performance of the first task in a case in which the first task exclusively occupies a first candidate resource scale corresponding to the first task is determined based on the first performance model of the first task. A candidate resource scale corresponding to the first task includes the first candidate resource scale corresponding to the first task

The first task may be any task in the plurality of tasks.

For any one of the plurality of tasks, a first performance model of the task may be constructed based on running performance of the task. The first performance model of the task is used to predict running performance of the task in a case in which the task exclusively occupies a resource scale corresponding to the task. An input of the first performance model of the task may include the resource scale corresponding to the task, and an output of the first performance model of the task may include the running performance of the task in a case in which the task exclusively occupies the resource scale corresponding to the task. The first candidate resource scale is input into the performance model of the first task, so that the running performance of the first task in a case in which the first task exclusively occupies the first candidate resource scale corresponding to the first task can be predicted.

Alternatively, it may be understood in the following manner: The first performance model of the first task indicates a mapping relationship between the resource scale corresponding to the first task and the running performance of the first task in a case in which the first task exclusively occupies the resource scale. Based on the mapping relationship and the first candidate resource scale, the running performance of the first task in a case in which the first task exclusively occupies the first candidate resource scale corresponding to the first task may be determined.

For example, running performance of another task in the plurality of tasks may also be determined in the foregoing manner. For example, step 520 may include: constructing a first performance model of each task based on the running performance data of each task in the plurality of tasks; and determining, based on the first performance model of each task, running performance of each task in a case in which the task exclusively occupies a corresponding first candidate resource scale.

The resource scale used as the input of the first performance model of the task may be used as the first candidate resource scale corresponding to the task. There may be one or more first candidate resource scales. For different tasks, first candidate resource scales corresponding to the tasks may be the same or may be different.

For example, the plurality of tasks may include a task #1 and a task #2. A candidate resource scale corresponding to the task #1 includes two unit resources and three unit resources. A candidate resource scale corresponding to the task #2 includes two unit resources. A first candidate resource scale corresponding to the task #1 may be two unit resources. In this case, the two unit resources may be input into a first performance model of the task #1, and the first performance model of the task #1 predicts running performance of the task #1 in a case in which the task #1 exclusively occupies the two unit resources. Running performance of the task #2 in a case in which the task #2 exclusively occupies the two unit resources may be determined in another manner. In this case, the candidate resource scale corresponding to the task #2 does not include a first candidate resource corresponding to the task #2.

For example, the first performance model may be an AI model. For example, the first performance model may be a neural network model. That the first performance model of the task is constructed based on the running performance data of the task may be understood as that the running performance data of the task is used as training data for training, to obtain the first performance model of the task.

Alternatively, the first performance model may also be another model. For specific descriptions, refer to the method 600.

In this embodiment of this application, performance modeling is performed on the plurality of tasks based on the running performance data of the plurality of tasks. This helps implement accurate performance analysis on each task, and provides a basis for proper allocation of subsequent computing power resources.

Example 2:

Optionally, the method 500 further includes: respectively constructing fluctuation coefficient models of the plurality of tasks based on the running performance data of the plurality of tasks. The fluctuation coefficient models of the plurality of tasks are respectively used to predict fluctuation coefficients that are of the plurality of tasks and that correspond to resource allocation schemes input into the fluctuation coefficient models of the plurality of tasks.

For one task, a fluctuation coefficient model of the task may be used to predict a fluctuation coefficient that is of the task and that corresponds to a resource allocation scheme input into the fluctuation coefficient model. An input of the fluctuation coefficient model is a resource configuration scheme, and an output is a fluctuation coefficient that is of the task and that corresponds to the resource configuration scheme, or a fluctuation coefficient of the task in the resource configuration scheme.

Alternatively, it may be understood in the following manner: The fluctuation coefficient model of the task indicates a mapping relationship between the resource allocation scheme and the fluctuation coefficient of the task in the resource allocation scheme.

A fluctuation coefficient that is of one task and that corresponds to one resource allocation scheme indicates a difference between running performance of the task in the resource allocation scheme and running performance of the task in a case in which the task exclusively occupies a resource scale corresponding to the task. The resource scale corresponding to the task is indicated by the resource allocation scheme.

For example, a fluctuation coefficient that is of one task and that corresponds to one resource allocation scheme may be a ratio of running performance of the task in the resource allocation scheme to running performance of the task in a case in which the task exclusively occupies a resource scale corresponding to the task. The resource scale corresponding to the task is indicated by the resource allocation scheme.

For example, the fluctuation coefficient model may be an AI model. For example, the fluctuation coefficient model may be a neural network model. That the fluctuation coefficient model of each task is constructed based on the running performance data of each task in the plurality of tasks may be understood as that the running performance data of each task is used as training data for training, to obtain the fluctuation coefficient model of each task.

Alternatively, the fluctuation coefficient model may also be another model. For specific descriptions, refer to the method 600.

Optionally, the plurality of tasks include a second task. Running performance of the second task in a case in which the second task exclusively occupies a second candidate resource scale corresponding to the second task is determined based on a fluctuation coefficient model of the second task in the plurality of tasks and running performance data of the second task. A candidate resource scale corresponding to the second task includes the second candidate resource scale corresponding to the second task. The running performance data of the second task includes running performance of the second task in a sample resource allocation scheme corresponding to the second task. The second candidate resource scale is a sample resource scale indicated by the sample resource allocation scheme corresponding to the second task.

The second task may be any task in the plurality of tasks. For any one of the plurality of tasks, a fluctuation coefficient model of the task may be constructed based on running performance data of the task. The fluctuation coefficient model of the task is used to predict a fluctuation coefficient that is of the task and that corresponds to a resource configuration scheme input into the fluctuation coefficient model of the task. The resource configuration scheme input into the fluctuation coefficient model of the task is a resource configuration scheme corresponding to the task. An input of the fluctuation coefficient model of the task may include a resource allocation scheme, and an output of the fluctuation coefficient model of the task may include a fluctuation coefficient that is of the task and that corresponds to the resource allocation scheme, that is, a fluctuation coefficient of the task in the resource allocation scheme.

Alternatively, the following manner may be used for understanding. The fluctuation coefficient model of the task indicates a mapping relationship between the resource allocation scheme input into the fluctuation coefficient model and the fluctuation coefficient of the task in the resource allocation scheme. The fluctuation coefficient of the task in the resource allocation scheme corresponding to the task may be determined based on the mapping relationship and the resource allocation scheme corresponding to the task.

In step 520, the sample resource allocation scheme corresponding to the second task may be input into the fluctuation model of the second task, and the fluctuation coefficient of the second task in the sample resource allocation scheme is predicted based on the fluctuation model of the second task. The running performance of the second task in a case in which the second task exclusively occupies the second candidate resource scale corresponding to the second task may be predicted based on the fluctuation coefficient and the running performance of the second task in the sample resource allocation scheme. The second candidate resource scale corresponding to the second task is a sample resource scale indicated by the sample resource allocation scheme.

A process of determining, based on running performance of one task in a resource allocation scheme corresponding to the task, running performance of the task in a case in which the task exclusively occupies a resource scale indicated by the resource allocation scheme corresponding to the task may be referred to as performance inverse resolution.

For example, running performance of another task in the plurality of tasks may also be determined in the foregoing manner. For example, step 520 may include: determining, based on the fluctuation coefficient model of each task and the running performance data of each task, running performance of each task in a case in which the task exclusively occupies a second candidate resource scale corresponding to the task. The running performance data of each task includes running performance of each task in a sample resource allocation scheme corresponding to the task. The second candidate resource scale corresponding to each task is a sample resource scale indicated by the sample resource allocation scheme corresponding to the task. The candidate resource scale corresponding to each task includes the sample resource scale corresponding to the task.

The resource scale indicated by the resource allocation scheme used as the input of the fluctuation coefficient model of the task may be used as the second candidate resource scale corresponding to the task. There may be one or more second candidate resource scales. For different tasks, second candidate resource scales corresponding to the tasks may be the same or may be different.

For example, the plurality of tasks may include a task #1 and a task #2. A candidate resource scale corresponding to the task #1 includes two unit resources and three unit resources. A candidate resource scale corresponding to the task #2 includes two unit resources. A resource scale indicated by a sample resource allocation scheme corresponding to the task #1 is three unit resources. In other words, a second resource scale corresponding to the task #1 may be three unit resources. In this case, the sample resource allocation scheme corresponding to the task #1 may be input into a fluctuation coefficient model of the task #1, and a fluctuation coefficient of the task #1 in the sample resource allocation scheme is predicted by the fluctuation coefficient model of the task #1. Performance inverse resolution is performed, based on the fluctuation coefficient, on running performance of the task #1 in the resource allocation scheme corresponding to the task #1, to obtain running performance of the task #1 in a case in which the task #1 exclusively occupies the three unit resources. Running performance of the task #2 in a case in which the task #2 exclusively occupies the two unit resources may be determined in another manner. In this case, the candidate resource scale corresponding to the task #2 does not include a second candidate resource scale corresponding to the task #2.

In the solution in this embodiment of this application, performance inverse resolution is performed on the running performance data of the task in the sample resource allocation scheme based on the fluctuation coefficient of the task, to predict the running performance of the task in a case in which the task exclusively occupies the resource. This helps implement accurate performance analysis on each task, and provides a basis for proper allocation of subsequent computing power resources.

Example 3:

Optionally, the running performance data of the plurality of tasks obtained in step 510 includes running performance of a third task in the plurality of tasks in a case in which the third task exclusively occupies a third candidate resource scale corresponding to the third task. A candidate resource scale corresponding to the third task includes the third candidate resource scale corresponding to the third task.

The third task may be any task in the plurality of tasks. For any one of the plurality of tasks, if the running performance data of the task obtained in step 510 includes running performance of the task in a case in which the task exclusively occupies a resource, a resource scale exclusively occupied by the task may be used as a third candidate resource scale corresponding to the task. Correspondingly, the running performance of the task in a case in which the task exclusively occupies the resource is running performance of the task in a case in which the task exclusively occupies the third candidate resource scale corresponding to the task.

There may be one or more third candidate resource scales. For different tasks, third candidate resource scales corresponding to the tasks may be the same or may be different.

For example, the plurality of tasks may include a task #1 and a task #2. A candidate resource scale corresponding to the task #1 includes two unit resources and three unit resources. A candidate resource scale corresponding to the task #2 includes two unit resources. The running performance data of the plurality tasks obtained in step 510 includes running performance of the task #2 in a case in which the task #2 exclusively occupies the two unit resources. In this case, a third candidate resource scale corresponding to the task #2 may be two unit resources. Running performance of the task #1 in a case in which the task #1 exclusively occupies the two unit resources and the three unit resources may be determined in another manner. In this case, the candidate resource scale corresponding to the task #1 does not include a third candidate resource scale corresponding to the task #3.

The first task, the second task, and the third task may be the same or may be different.

**In** other words, for one task, a part or all of the foregoing three examples may be used to determine running performance of the task in a case in which the task exclusively occupies a candidate resource scale corresponding to the task. For example, if the foregoing three examples are used to determine the running performance of the task in a case in which the task exclusively occupies the candidate resource scale corresponding to the task, the candidate resource scale corresponding to the task includes a first candidate resource scale corresponding to the task, a second candidate resource scale corresponding to the task, and a third candidate resource scale corresponding to the task. The running performance of the task in a case in which the task exclusively occupies the candidate resource scale corresponding to the task is determined in a corresponding manner.

It should be understood that the foregoing is merely an example, and step 520 may be alternatively implemented in another manner. For specific descriptions, refer to the method 600 in the following. Details are not described herein again.

For example, the running performance of the plurality of tasks in a case in which the plurality of tasks exclusively occupy the candidate resource scales corresponding to the plurality of tasks may be represented by a performance matrix of the plurality of tasks.

Elements at different locations in the performance matrix of the plurality of tasks may indicate running performance of the tasks corresponding to the locations in a case in which the tasks exclusively occupy resource scales corresponding to the locations.

For example, step 530 may be performed by the resource allocator 440 in FIG. 4.

Step 530 may include: determining a target resource allocation scheme based on running performance of the plurality of tasks in a case in which the plurality of tasks exclusively occupy target candidate resource scales corresponding to the plurality of tasks. The candidate resource scales corresponding to the plurality of tasks include the target candidate resource scales corresponding to the plurality of tasks.

There may be one or more target candidate resource scales corresponding to each task. For different tasks, target candidate resource scales corresponding to the tasks may be the same or may be different, and manners for determining the target candidate resource scales corresponding to the tasks may be the same or may be different.

The target candidate resource scale corresponding to each task may be a part of all candidate resource scales corresponding to each task.

In other words, the candidate resource scale corresponding to each task may be a part of all candidate resource scales corresponding to each task. For ease of description, in this embodiment of this application, the partial resource scale is referred to as the target candidate resource scale.

If each task corresponds to a large quantity of candidate resource scales, there are a large quantity of candidate resource scale combinations corresponding to the plurality of tasks, and a computing amount involved in determining the target resource allocation scheme may be excessively large, thereby affecting resource allocation efficiency. Embodiments of this application provide the following solutions, to determine the partial resource scale from the candidate resource scales, so that a quantity of candidate resource scale combinations is reduced, that is, search space in a subsequent target resource allocation process is reduced, thereby improving resource allocation efficiency.

Optionally, running performance of a fourth task in the plurality of tasks in a case in which the fourth task exclusively occupies a target candidate resource scale corresponding to the fourth task meets a preset condition #1, a target candidate resource scale corresponding to a fifth task in the plurality of tasks meets a preset condition #2, or a target candidate resource scale corresponding to a sixth task in the plurality of tasks and running performance of the sixth task in a case in which the sixth task exclusively occupies the target candidate resource scale corresponding to the sixth task meet a preset condition #3 (an example of the first preset condition).

The fourth task, the fifth task, and the sixth task may be the same or may be different.

The preset conditions may be set as required. For different tasks, preset conditions may be the same or may be different.

The following describes the preset condition #1 as an example.

Optionally, the preset condition #1 may include: The running performance of the fourth task in a case in which the fourth task exclusively occupies the target candidate resource scale corresponding to the fourth task is greater than or equal to a threshold #1.

The fourth task may be any task in the plurality of tasks. The fourth task may be the same as or different from the first task, the second task, and the third task.

For example, the threshold #1 may be manually set, or the threshold #1 may be preset.

In a candidate resource scale corresponding to one task, if running performance of the task in a case in which the task exclusively occupies one candidate resource scale is greater than or equal to the threshold #1, the candidate resource scale may be used as a target candidate resource scale corresponding to the task.

A target candidate resource scale corresponding to another task in the plurality of tasks may also be determined based on the target candidate resource scale corresponding to the fourth task.

Optionally, the running performance of the plurality of tasks in a case in which the plurality of tasks exclusively occupy the target candidate resource scales corresponding to the plurality of tasks are greater than or equal to the threshold #1.

It should be understood that the foregoing is merely an example. For example, in actual application, different thresholds #1 may be further set for tasks. This is not limited in embodiments of this application.

In this embodiment of this application, the target candidate resource scale may be determined based on the running performance of the task, and a candidate resource scale corresponding to high running performance is used as the target candidate resource scale, so that a proper resource is allocated to the task in subsequent resource allocation to ensure running performance of the task.

The foregoing is merely an example of the preset condition #1. In another possible scenario, the preset condition #1 may alternatively be another condition related to the running performance of the task.

The following describes the preset condition #2 as an example.

Optionally, the preset condition #2 may include: The target candidate resource scale corresponding to the fifth task is greater than or equal to a threshold #2.

The fifth task may be any task in the plurality of tasks. The fifth task may be the same as or different from the first task, the second task, and the third task.

For one task, if one candidate resource scale is greater than or equal to the threshold #2, the candidate resource scale may be used as a target candidate resource scale corresponding to the task.

For example, the threshold #2 may be manually set, or the threshold #2 may be preset.

A target candidate resource scale corresponding to another task in the plurality of tasks may also be determined based on the target candidate resource scale corresponding to the fifth task.

Optionally, the target candidate resource scales corresponding to the plurality of tasks are greater than or equal to the threshold #2.

It should be understood that the foregoing is merely an example. For example, in actual application, different thresholds #2 may be further set for tasks. This is not limited in embodiments of this application.

When the candidate resource scale corresponding to the task is small, parallel efficiency of the tasks is low, and the overall running performance of the plurality of tasks is affected. According to the solution in this embodiment of this application, an excessively low candidate resource scale is avoided to be as the target candidate resource scale, so that a proper resource is subsequently allocated to the tasks, to ensure parallel efficiency of the tasks.

The foregoing is merely an example of the preset condition #2. In another possible scenario, the preset condition #2 may alternatively be another condition related to the candidate resource scale.

The following describes the preset condition #3 as an example.

Optionally, the preset condition #3 includes: a ratio of the running performance of the sixth task in a case in which the sixth task exclusively occupies the target candidate resource scale corresponding to the sixth task to the target candidate resource scale corresponding to the sixth task is greater than or equal to a threshold #3 (an example of the first threshold).

The sixth task may be any task in the plurality of tasks. The sixth task may be the same as or different from the first task, the second task, and the third task.

For one task, a ratio of running performance of the task in a case in which the task exclusively occupies a resource scale corresponding to the task to the resource scale may be referred to as resource efficiency, that is, utilization efficiency of the task on the resource scale. The threshold #3 may be used as an efficiency threshold, that is, a threshold of utilization of the task on the resource scale. In a candidate resource scale corresponding to one task, if resource efficiency corresponding to one candidate resource scale is greater than or equal to the efficiency threshold, the candidate resource scale may be used as a target candidate resource scale corresponding to the task.

For example, the threshold #3 may be manually set, or the threshold #3 may be preset.

Generally, as the resource scale allocated to the task increases, the resource efficiency of the task decreases gradually. For example, corresponding resource efficiency before and after the resource efficiency is obviously reduced may be used as the efficiency threshold.

A target candidate resource scale corresponding to another task in the plurality of tasks may also be determined based on the target candidate resource scale corresponding to the sixth task.

Optionally, a ratio of running performance of each task in a case in which the task exclusively occupies a part of candidate resource scales corresponding to the task to the part of the candidate resource scales corresponding to the task is greater than or equal to the threshold #3.

In other words, a ratio of the running performance of the plurality of tasks in a case in which the plurality of tasks exclusively occupy the target candidate resource scales corresponding to the plurality of tasks to the target candidate resource scales corresponding to the plurality of tasks is greater than or equal to the threshold #3.

It should be understood that the foregoing is merely an example. For example, in actual application, different efficiency thresholds may be further set for tasks. This is not limited in embodiments of this application.

In a specific range, running performance of a task is significantly improved as a resource scale allocated to the task increases. However, after the resource scale allocated to the task reaches a specific threshold, the running performance of the task is not significantly improved, that is, resource efficiency of the task is reduced. When the resource efficiency is low, resources are wasted. In this embodiment of this application, a target candidate resource scale is determined based on the resource scale and the running performance of the task in a case in which the task exclusively occupies the resource scale corresponding to the task. This helps avoid a waste of resources caused by allocating excessive resources to the task in subsequent resource allocation. For example, in this embodiment of this application, the target candidate resource scale may be determined based on the ratio, that is, resource efficiency of the task, of the running performance of the task in a case in which the task exclusively occupies the resource scale corresponding to the task to the resource scale, and a candidate resource scale corresponding to high resource efficiency is used as the target candidate resource scale, to avoid a waste of resources caused by allocating excessive resources to the task in subsequent resource allocation.

The foregoing is merely an example of the preset condition #3. In another possible scenario, the preset condition #3 may alternatively be another condition related to the running performance of the task and the candidate resource scale corresponding to the task.

For example, in step 530, all resource allocation schemes in each resource scale combination in a plurality of resource scale combinations may be enumerated, and the overall running performance of the plurality of tasks in all the resource allocation schemes is calculated, to obtain an optimal solution. The optimal solution is a resource allocation scheme that enables the overall running performance of the plurality of tasks to be optimal, and the optimal solution may be used as the target resource allocation scheme. The plurality of resource scale combinations are determined based on a combination of target candidate resource scales corresponding to the plurality of tasks.

When there are a large quantity of resource scale combinations, this manner is complex and has long running time. This embodiment of this application provides the following solution to determine the target resource allocation scheme, so that a proper target resource allocation scheme can be obtained in short time, thereby ensuring the overall running performance of the plurality of tasks.

Optionally, step 530 may be implemented by using the following steps.

Step 531: Determine target candidate resource allocation schemes in the plurality of resource scale combinations based on running performance of each task in the plurality of tasks in a case in which the task exclusively occupies a target candidate resource scale corresponding to the task. The plurality of resource scale combinations are determined based on a combination of target candidate resource scales corresponding to the plurality of tasks. A target candidate resource allocation scheme in each resource scale combination in the plurality of resource scale combinations indicates a target candidate resource corresponding to each task in the plurality of tasks in each resource scale combination.

Step 532: Determine fluctuation coefficients that are of the plurality of tasks and that correspond to the target candidate resource allocation scheme in each resource scale combination in the plurality of resource scale combinations. The fluctuation coefficients that are of the plurality of tasks and that correspond to the target candidate resource allocation scheme in each resource scale combination respectively indicate differences between running performance of the plurality of tasks in parallel execution in the target candidate resource allocation scheme in each resource scale combination and running performance of the plurality of tasks in a case in which the plurality of tasks exclusively occupy resource scales corresponding to the tasks in each resource scale combination.

The resource scale corresponding to each task in each resource scale combination is a target candidate resource scale corresponding to each task in each resource scale combination.

Step 533: Predict, based on the fluctuation coefficients that are of the plurality of tasks and that correspond to the target candidate resource allocation scheme in each resource scale combination and the running performance of the plurality of tasks in a case in which the plurality of tasks exclusively occupy the target candidate resource scales corresponding to the tasks in each resource scale combination, the running performance of the plurality of tasks in parallel execution in the target candidate resource allocation scheme in each resource scale combination.

Step 534: Determine, from the target candidate resource allocation schemes in the plurality of resource scale combinations, the target resource allocation scheme based on running performance of the plurality of tasks in parallel execution in the target candidate resource allocation schemes in the plurality of resource scale combinations.

For example, the plurality of resource scale combinations include the combination of the target candidate resource scales corresponding to the plurality of tasks. One target candidate resource scale is selected from all target candidate resource scales corresponding to each task, that is, one resource scale combination is formed. In other words, one resource scale combination may include one target candidate resource scale corresponding to each task.

In step 531, the target candidate resource allocation scheme in each resource scale combination may be determined.

EP 4 625 168 A1

Step 531 may include: separately determining, from the candidate resource allocation schemes in the plurality of resource scale combinations, the target candidate resource allocation schemes in the plurality of resource scale combinations based on the running performance of each task in the plurality of tasks in a case in which the task exclusively occupies the target candidate resource scale corresponding to the task.

For example, overall running performance of the plurality of tasks in a case in which the plurality of tasks exclusively occupy the target candidate resource scales corresponding to the tasks in each resource scale combination in the target candidate resource allocation scheme in the resource scale combination is better than overall running performance of the plurality of tasks in a case in which the plurality of tasks exclusively occupy the target candidate resource scales corresponding to the tasks in each resource scale combination in another candidate resource allocation scheme in the resource scale combination.

In other words, for one resource scale combination in the plurality of resource scale combinations, a target candidate resource allocation scheme in the resource scale combination may be selected from candidate resource allocation schemes in the resource scale combination. The target candidate resource allocation scheme in the resource scale combination may be an optimal candidate resource allocation scheme in all candidate resource allocation schemes in the resource scale combination. The optimal candidate resource allocation scheme is a candidate resource allocation scheme that enables overall running performance of the plurality of tasks to be optimal in a case in which the plurality of tasks exclusively occupy the target candidate resource scales corresponding to the tasks in the resource scale combination.

A candidate resource allocation scheme in one resource scale combination may include all resource allocation schemes that meet the resource scale combination. In other words, a resource scale that corresponds to each task and that is indicated by a candidate resource allocation scheme in one resource scale combination is consistent with the resource scale combination.

For each resource scale combination, the target candidate resource allocation scheme in the resource scale combination may be a candidate resource allocation scheme that is in all candidate resource allocation schemes in the resource scale combination and that enables overall running performance of the plurality of tasks to be optimal in a case in which the plurality of tasks exclusively occupy resources.

Optionally, candidate resources that correspond to each task and that are indicated by the candidate resource allocation schemes in each resource scale combination are consecutive.

Resources that correspond to the task and that are indicated by the candidate resource allocation scheme may be consecutive. In this case, the resource corresponding to each task may be indicated by a start location of the resource corresponding to the task and a resource scale corresponding to the task.

For example, a target candidate resource allocation scheme in each resource scale combination may be determined according to a bin packing algorithm. For specific descriptions, refer to related descriptions in the method 600.

For example, step 531 may be implemented according to a bin packing algorithm. For specific descriptions, refer to the method 600.

In step 532, for each resource scale combination, fluctuation coefficients that are of the plurality of tasks and that correspond to a target candidate resource allocation scheme in the resource scale combination may be separately determined.

For one resource scale combination, only fluctuation coefficients that are of a part of tasks and that correspond to a target candidate resource allocation scheme in the resource scale combination may be calculated. The part of tasks is a task that shares a resource with another task in the target candidate resource allocation scheme. For example, in the target candidate resource allocation scheme, a resource allocated to a task #1 includes a process #1, a resource allocated to a task #2 also includes the process #1, and a resource allocated to a task #3 is not allocated to another task. In this case, in the target candidate resource allocation scheme, a fluctuation coefficient of the task #1 and a fluctuation coefficient that is of the task #2 and that corresponds to the scheme may be calculated, and a fluctuation coefficient of the task #3 does not need to be calculated.

The fluctuation coefficient of each task indicates a difference between running performance of the task in a case in which the task is executed in parallel with another task in the target resource allocation scheme and running performance of the task in a case in which the task exclusively occupies a target candidate resource scale corresponding to the task in the resource scale combination.

For example, the fluctuation coefficients that are of the plurality of tasks and that correspond to the target candidate resource allocation scheme in each resource scale combination respectively indicate ratios of the running performance of the plurality of tasks in parallel execution in the target candidate resource allocation scheme in the resource scale combination to the running performance of the plurality of tasks in a case in which the plurality of tasks exclusively occupy the target candidate resource scales corresponding to the plurality of tasks in the resource scale combination.

In other words, for one task, a fluctuation coefficient that is of the task and that corresponds to a target candidate resource allocation scheme in each resource scale combination indicates a ratio of running performance of the task in a case in which the task is executed in parallel with another task in the target candidate resource allocation scheme to running performance of the task in a case in which the task exclusively occupies a target candidate resource scale corresponding to the task in the resource scale combination.

Optionally, step 532 includes: determining, based on the fluctuation coefficient models of the plurality of tasks, fluctuation coefficients that are of the plurality of tasks and that correspond to the target candidate resource allocation scheme in each resource scale combination in the plurality of resource scale combinations.

As described above, for one task, a fluctuation coefficient model of the task may be used to predict a fluctuation coefficient that is of the task and that corresponds to a resource allocation scheme input into the fluctuation coefficient model.

For each resource scale combination, a target candidate resource allocation scheme in the resource scale combination is separately input into the fluctuation coefficient models of the plurality of tasks, so that the fluctuation coefficients that are of the plurality of tasks and that correspond to the target candidate resource allocation scheme can be obtained.

Specifically, step 533 may include: determining, based on the fluctuation coefficients that are of the plurality of tasks and that correspond to the target candidate resource allocation scheme in each resource scale combination in the plurality of resource scale combinations and the running performance of the plurality of tasks in a case in which the plurality of tasks exclusively occupy the target candidate resource scales corresponding to the tasks in each resource scale combination, running performance of the plurality of tasks in parallel execution in the target candidate resource allocation scheme in each resource scale combination; and determining, based on the running performance of the plurality of tasks in parallel execution in target candidate resource allocation schemes corresponding to the plurality of resource scale combinations, overall running performance of the plurality of tasks in parallel execution in the target candidate resource allocation schemes corresponding to the plurality of resource scale combinations.

As described above, for each resource scale combination, a fluctuation coefficient of one task indicates a difference between running performance of the task in a case in which the task is executed in parallel with another task in the target resource allocation scheme and running performance of the task in a case in which the task exclusively occupies a target candidate resource scale corresponding to the task in the resource scale combination. According to the fluctuation coefficient of the task and the running performance of the task in a case in which the task exclusively occupies the target resource scale corresponding to the task, the running performance of the task in a case in which the task is executed in parallel with the another task in the target resource allocation scheme may be calculated. Overall running performance of the plurality of tasks in parallel execution in the target resource allocation scheme may be determined based on the running performance of the plurality of tasks in parallel execution in the target resource allocation scheme.

For example, in step 534, a target candidate resource allocation scheme with optimal overall running performance may be used as the target resource allocation scheme.

Optionally, a target resource corresponding to each task includes one or more processes corresponding to the task. The one or more processes are separately bound to one or more slots.

The slot may one-to-one correspond to a processor core. That the one or more processes are separately bound to one or more slots may also be understood as that the one or more processes are separately bound to one or more processor cores.

In a related solution, after a task is allocated to a computing power node, the computing power node may allocate a processor core to the task, to implement computing of the task. However, there is no global information in the computing power node, that is, there is no information about all available resources in the computing power node. Therefore, it is difficult to obtain an optimal resource allocation scheme in the related solution. In the solution in this embodiment of this application, the process is bound to the slot, or the process is bound to the processor core, so that allocation of the process can be globally implemented, that is, allocation of processor core is globally implemented, thereby helping obtain an optimal resource allocation scheme. In addition, in the solution in this embodiment of this application, the process is bound to the processor core, so that refined computing power allocation is implemented, and secondary scheduling of a computing power node kernel is not required. In other words, a computing power node does not need to schedule a processor core for the process, thereby avoiding overheads caused by secondary scheduling.

Optionally, a target resource corresponding to each task includes one or more processes corresponding to the task. The plurality of processes are separately bound to a plurality of consecutive slots.

That the plurality of slots are a plurality of consecutive slots means that numbers of the plurality of slots are consecutive.

Optionally, the plurality of processes are a plurality of consecutive processes. The plurality of slots are a plurality of consecutive slots.

In this embodiment of this application, the consecutive slots are allocated to the tasks, so that communication costs during execution of the tasks are reduced, and the running performance of the tasks is further improved.

Optionally, the method 500 further includes: outputting indication information of the target resource allocation scheme.

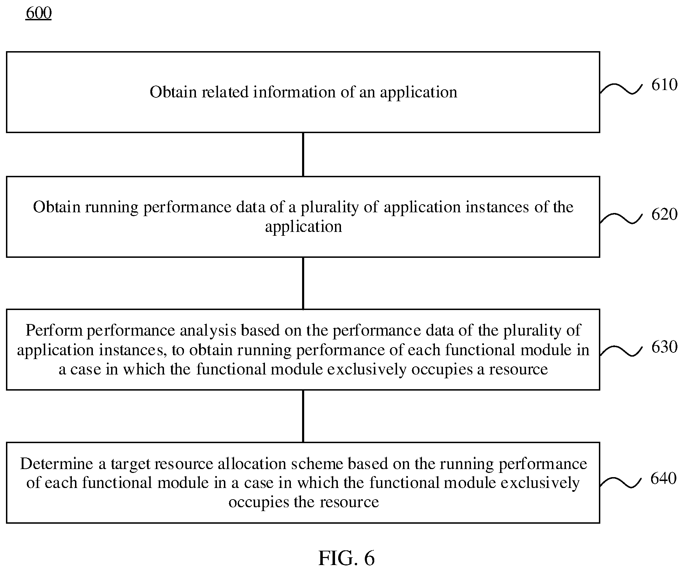

FIG. 6 is a schematic flowchart of a computing power resource allocation method according to an embodiment of this application. The method 600 shown in FIG. 6 may be considered as a specific implementation of the method 500 shown in FIG. 5. For related descriptions, refer to the method 500. To avoid repetition, some descriptions are properly omitted when the method 600 is described. The method 600 may be performed by a resource allocation apparatus. The apparatus may be deployed in an application as a module, or deployed outside an application, for example, deployed in a computing resource management and control system.

As shown in FIG. 6, the method 600 includes the following steps.

Step 610: Obtain related information of an application. The related information of the application includes information about a plurality of functional modules in the application and information about an available resource.

For example, a user may submit a processing request of the application. The resource allocation apparatus may obtain the related information of the application.

The information about the plurality of functional modules in the application may indicate the plurality of functional modules in the application or a quantity of functional modules in the application.

The functional module in the application is a functional module enabled during execution of the current application. The plurality of functional modules in the application respectively correspond to the plurality of tasks in the method 500. For ease of understanding, in the method 600, the task in the method 500 is replaced with the functional module for description.

The information about the available resource indicates an available resource or a scale of an available resource. For example, the information about the available resource may be represented by a hardware parameter.

For example, the scale of the available resource may be a quantity of available computing power nodes.

For example, the scale of the available resource may be a quantity of available processors.

For example, the scale of the available resource may be a quantity of available processor cores.

In addition, the related information of the application may further include other content. For example, the related information of the application may further include information about an application architecture. The information about the application architecture may indicate a coupling manner of the functional module in the application. For another example, the related information of the application may further include user information.

An application of a CESM is used as an example. Related information of the CESM may include a quantity of functional modules enabled in the CESM, a quantity of available processor cores, and simulation time of the CESM.

Step 610 corresponds to step 501 in the method 500. For specific descriptions, refer to related descriptions in step 501. Details are not described herein again.

Step 620: Obtain running performance data of a plurality of application instances of the application. The running performance data of the plurality of application instances includes running performance data of the plurality of functional modules.

The running performance data of the plurality of application instances may include running performance data of the plurality of application instances in a plurality of sample resource scale combinations. Alternatively, the plurality of application instances may be application instances in a plurality of sample resource scale combinations.

The sample resource scale combination may include a combination of sample resource scales corresponding to the plurality of functional modules.

The resource allocation scheme indicates a resource corresponding to the functional module, that is, a resource allocated to the functional module. Resource allocation schemes in different resource scale combinations are different. That the running performance data of the plurality of application instances includes running performance data of the plurality of application instances in a plurality of sample resource scale combinations may also be understood in the following manner. The running performance data of the plurality of application instances may include performance data of the plurality of application instances in a plurality of resource allocation schemes, and a combination of resource scales that correspond to each functional module and that are indicated by the plurality of sample resource allocation schemes includes the plurality of sample resource scale combinations.

For example, the sample resource allocation scheme may indicate a process allocation situation of each functional module.

For example, processes allocated to each functional module may be consecutive. The process allocated to each functional module may be represented by an ID of a start process and an ID of an end process that are allocated to the functional module. Alternatively, the process allocated to each functional module may be represented by an ID of a start process allocated to the functional module and a quantity of processes allocated to the functional module. Alternatively, the process allocated to each functional module may be represented by another parameter.

The sample resource scale may be represented by a resource parameter, and correspondingly, the sample resource scale combination may be represented by a resource parameter combination. A plurality of sample resource scales may be represented as a plurality of resource parameter combinations. The resource parameter combination indicates a parameter of a resource allocated to each functional module.

The CESM is used as an example. Functional modules enabled in the CESM may include ATM and OCN. A sample resource scale combination for the ATM and the OCN may be represented by a combination of parameters indicating resources allocated to the ATM and the OCN. For example, the parameter indicating the resource allocated to the ATM may be a quantity of processes allocated to the ATM (NATM), and the parameter indicating the resource allocated to the OCN may be a quantity of processes allocated to the OCN (NOCN). The sample resource scale combination may be represented as a resource parameter combination (NATM, NOCN).

For example, step 620 may be implemented by using the following steps.

621: Determine the plurality of sample resource scale combinations.

For example, a default resource scale combination of the application is obtained based on the related information of the application. The plurality of sample resource scale combinations are determined based on the default resource scale combination of the application. The sample resource scale may be represented by the resource parameter, and correspondingly, the sample resource scale combination may be represented by the resource parameter combination.

The default resource scale combination can be used as a baseline and a basis for performance analysis.

For example, a resource scale combination is selected from a neighborhood of the default resource scale combination of the application, and the resource scale combination and the default resource scale combination jointly form the plurality of sample resource scale combinations. This process may be referred to as parameter amplification.

For example, the default resource scale combination may be specified by the user. For example, the user may indicate default resource scales corresponding to functional modules, and a combination of the default resource scales corresponding to the functional modules may be used as a default scale combination.

Alternatively, the default resource scale combination may be preset.

Alternatively, the default resource scale combination may be determined by the resource allocation apparatus based on another related solution.

For example, the resource allocation apparatus determines the default resource scale combination according to a general algorithm.

For example, the neighborhood of the default resource scale combination may include a combination formed by resource scales whose differences from corresponding default resource scales in the default resource scale combination are less than or equal to z. Z is the scale threshold described above. The combination is a parameter combination formed by resource scales whose differences from the default resource scales corresponding to the functional modules are within z. z is a positive integer. For example, z=3.

For example, the resource scale combination may be a combination of quantities of processes allocated to the functional modules. The default resource scale combination is a combination of default quantities of processes allocated to the functional modules. The CESM is used as an example. Functional modules enabled in the CESM may include ATM and OCN, and the resource scale combination may be a combination of quantities of processes allocated to the ATM and the OCN. For example, the default resource scale combination may be represented as (5, 5), that is, the quantity of processes allocated to the ATM by default is 5, and the quantity of processes allocated to the OCN by default is 5. The neighborhood of the default resource scale combination may include a combination formed by quantities of processes that are three processes different from a quantity of processes allocated to each module by default. The resource scale combination selected from the neighborhood of the default resource scale combination may include (4, 7) and (6, 3). The plurality of sample resource scale combinations may include (5, 5), (4, 7), and (6, 3).

It should be understood that the foregoing is merely an example, and the plurality of sample resource scale combinations may be alternatively determined in another manner. For example, the plurality of sample resource scale combinations may be randomly determined. Alternatively, the plurality of sample resource scale combinations may be determined by the user.

622: Obtain the running performance data of the plurality of application instances in the plurality of sample resource scale combinations.

In other words, running performance data of an application instance that meets a sample resource scale in the plurality of sample resource scale combinations is obtained.

The CESM is used as an example. The plurality of sample resource scale combinations determined based on step 621 may include (5, 5), (4, 7), and (6, 3). In step 622, running performance data of an application instance that meets a sample resource scale in the (5, 5), the (4, 7), and the (6, 3) may be obtained.

For example, an application instance to which five processes are allocated to the ATM may be used as one application instance in the plurality of application instances.

For example, step 622 may be implemented in at least one of the following manners:

(1) Obtain running performance data from historical data of the application.

Running performance data of an application instance that meets the plurality of sample resource scale combinations is collected from the historical data of the application.

In other words, in the historical data of the application, if a resource scale combination used by one application instance belongs to the plurality of sample resource scale combinations, running performance data of the application instance may be used as the running performance data of the plurality of application instances in step 620.

(2) Obtain running performance data from monitoring data of an application instance that is being executed.

Running performance data of an application instance that meets the plurality of sample resource scale combinations is collected from the application instance that is being executed.

In other words, for the application instance that is being executed, if a resource scale combination used by one application instance belongs to the plurality of sample resource scale combinations, running performance data of the application instance may be obtained from the monitoring data of the application instance, and the running performance data is used as the running performance data of the plurality of application instances in step 620.

(3) Pre-execute the application under the plurality of sample resource scale combinations. Running performance data of the plurality of application instances in the plurality of sample resource scale combinations is obtained from the monitoring data.

A resource is allocated to each functional module based on one sample resource scale combination, and pre-execution is performed on the resource for a period of time. The running performance data obtained from the monitoring data may be used as running performance data of an application instance in the sample resource scale combination.

The foregoing three manners may be used independently or may be used in combination. For example, running performance data of application instances in a part of the plurality of sample resource scale combinations is obtained from the historical data, and running performance data of application instances in the other part of the plurality of sample resource scale combinations may be obtained by pre-executing the application in a corresponding sample resource scale combination.

It should be understood that the foregoing three manners are merely examples, and constitute no limitation on the solutions in embodiments of this application.

For example, the performance data of the application instance may include at least one of the following: running time, a response delay, resource utilization, or the like. For ease of understanding, in the method 600, the running time is mainly used as an example for description, and constitutes no limitation on the solutions in embodiments of this application. The running time may include running time of the application and running time of each functional module in the application.

Step 620 corresponds to step 510 in the method 500. For specific descriptions, refer to related descriptions in step 510. Details are not described herein again.

Step 630: Perform performance analysis based on the performance data of the plurality of application instances, to obtain running performance of each functional module in a case in which the functional module exclusively occupies a resource.

Different applications have different behavior characteristics during execution. The behavior characteristic of the application may also be referred to as a performance characteristic of the application. For example, if a same resource is given, different applications have different running performance. For another example, when a given resource increases, running performance of an application is generally improved, but running performance of different applications is improved to different degrees. The behavior characteristic of the application may be determined based on performance data of the application instance and function logic of the application instance. The function logic of the application instance is a functional module enabled in the application instance.

In step 630, performance modeling may be performed based on the performance data of the plurality of application instances, to obtain a performance model of the application. Alternatively, in step 630, performance modeling may be performed based on the performance data of the plurality of application instances and function logic of the plurality of application instances, to obtain a performance model of the application. The performance model of the application may indicate a mapping relationship between a given resource of an application and running performance of the application in the resource. In other words, in step 630, a relationship between the resource and the running performance of the application is constructed, and the behavior characteristic of the application is analyzed.

In this way, proper computing power resources may be adaptively allocated to applications in different scenarios, or proper resource allocation schemes may be provided for applications in different scenarios.

For example, step 630 may be implemented by using the following steps.

Step 631: Construct an application model. The application model indicates a relationship between overall running performance of an application and running performance of a plurality of functional modules of the application.

In other words, the application model can be used to predict the overall running performance of the application. An input of the application model may be running performance of each functional module in different resource allocation schemes, and an output of the application model is overall running performance that is of the application in a corresponding resource allocation scheme and that is predicted by the application model. A comparison between the overall running performance that is of the application and that is predicted by the application model and actual overall running performance of the application may be used to measure modeling accuracy of the application model.

The overall running performance of the application is overall running performance of the plurality of functional modules of the application when the plurality of functional modules are executed in parallel.

The following describes the construction method of the application model by using an example in which the running performance is running time.

Optionally, the application model may satisfy the following formula:

$$T_{tot} = \max_{0 \le j \le N-1} \sum_{i \in C} H(j - r_i + 1) H(r_i + n_i - j) T_i + f(r, n) + \varepsilon.$$

$T_{tot}$ indicates running time of the application, and $T_i$ indicates running time of a functional module i. C indicates a set of functional modules. $r_i$ indicates an ID of a start process of the functional module i. $n_i$ indicates a quantity of processes used by the functional module i. $n_i$ is an integer. A resource allocated to the functional module i in a single thread may include a process that an ID belongs to $[r_i, r_i + n_i - 1]$. N indicates a total quantity of processes that need to be invoked by the application, and j indicates an ID of the process.

Each process may be allocated to one or more functional modules. For example, the total quantity of processes that need to be invoked by the application may satisfy the following formula:

$$N = \max_{i \in C} r_i + n_i.$$

$f(r, n)$ indicates a communication cost function between coupling functions, and is used to determine a communication cost between functional modules in a given resource allocation scheme. A function value of $f(r, n)$ is related to a resource allocation scheme manner, and specifically, is closely related to relative locations of resources of each functional module and each coupling module. $r$ indicates a vector formed by a start process of each functional module, and $n$ indicates a vector formed by a quantity of processes used by each functional module. $f(r, n)$ is usually small. $\varepsilon$ indicates resource coordination and initialization time of a system after a user submits the application.

H(x) is a Heaviside step function (Heaviside step function). H(x) may satisfy the following formula:

$$H(x) = \begin{cases} 1, x > 0 \\ 0, x \le 0 \end{cases}.$$

It should be understood that the foregoing is merely an example, and the application model may be alternatively represented in another form. This is not limited in embodiments of this application.

Step 632: Construct performance models of the plurality of functional modules of the application, and determine interference between the plurality of functional modules.

For example, the performance module of the functional module may be a first performance model of the functional module. A first performance model of each functional module may be used to predict running performance of the functional module in a case in which the functional module exclusively occupies a resource scale input into the first performance model.

For example, the performance module of the functional module may be a second performance model of a kinetic energy module. A second performance model of each functional module may be used to predict running performance of the functional module in a case in which the functional module is executed in parallel with another functional module in a resource allocation scheme input into the second performance model.

For example, interference between the functional modules may be indicated by fluctuation coefficients of the functional modules. In different resource allocation schemes, interference between functional modules may be different. Correspondingly, in the different resource allocation schemes, fluctuation coefficients of a same functional module may also be different.

The fluctuation coefficient of each functional module may be determined via a fluctuation coefficient model of the functional module. The fluctuation coefficient model of each functional module may indicate a relationship between a resource allocation scheme and a fluctuation coefficient of the functional module.

In this case, the performance model of the application may include an application model, a performance model of each module, and the fluctuation coefficient model of each functional module.

The following describes the performance model of the functional module by using an example in which the running performance is running time.

A second performance model of the functional module i may satisfy the following formula:

$$T_i = \gamma_i (T_{i,init} + T_{i,comp} + T_{i,comm}).$$

A first performance model of the functional module i may satisfy the following formula:

$$T_i' = T_{i,init} + T_{i,comp} + T_{i,comm} \, .$$

$\gamma_i$ indicates a fluctuation coefficient of the functional module i in a given resource allocation scheme. $T_{i,init}$ indicates initialization time. $T_{i,comp}$ indicates computing time, and $T_{i,comn}$ indicates communication time. Running time $T_i'$ of the functional module i in a case in which the functional module i exclusively occupies a resource may include three parts: $T_{i,init}$, $T_{i,comp}$, and $T_{i,comm}$. Because the functional module i may preempt a resource with another functional module, the fluctuation coefficient $\gamma_i$ needs to be considered for running time $T_i$ of the functional module i, that is, the fluctuation coefficient $\gamma_i$ is multiplied by the running time in a case in which the functional module i exclusively occupies the resource, to obtain the running time $T_i$ of the functional module i.

$T_{i,init}$ may satisfy the following formula:

$$T_{i,init} = \alpha_{i,1} n_i + \alpha_{i,2} \, .$$

$\alpha_{i,1}$ and $\alpha_{i,2}$ are coefficients. $\alpha_{i,1}$ indicates that the initialization time includes a part related to the quantity of processes used by the functional module i and $\alpha_{i,2}$ indicates that the initialization time includes a part unrelated to the quantity of processes used by the functional module i. $\alpha_{i,1} > 0$. $\alpha_{i,2} > 0$.

$T_{i,comp}$ may satisfy the following formula:

$$T_{i,comp} = \left[ \frac{a_i W_i}{n_i} + (1 - a_i) W_i \right] / p \, .$$

$W_i$ indicates a total load of the functional module i. According to Amdahl's law (Amdahl's Law), a computing task can be divided into a parallel part and a non-parallel part. $a_i$ indicates a proportion of the parallel part. $p$ indicates processor performance. Herein, it is assumed that the processor performance is the same. $0 \le a_i \le 1$. $W_i > 0$. $p > 0$.

$T_{i,comm}$ may satisfy the following formula:

$$T_{i,comm} = \beta_i \log n_i \, .$$

$\beta_i$ indicates a communication delay. Here, it is assumed that information transmission inside the functional module is mainly completed through global communication, a tree-shaped reduction method is mainly used, and time complexity is $\log n_i$. $\beta_i > 0$.

$\gamma_i$ may be determined based on a harmonic average of process loads included in the functional module. $\gamma_i > 1$. $\gamma_i$ may satisfy the following formula:

$$\gamma_i = \frac{n_i^2}{W_i \sum_{j=r_i}^{r_i + n_i - 1} 1 / L_j} \, .$$

The foregoing formula may be used as a model of the fluctuation coefficient of the functional module i.

$L_j$ may satisfy the following formula:

$$L_j = \sum_{i \in C} \frac{W_i}{n_i} H \left( j - r_i + 1 \right) H \left( r_i + n_i - j \right) \, .$$

$L_j$ indicates a load of a $j^{th}$ process.

A correlation coefficient of the model may be fitted for the foregoing model based on the performance data of the plurality of application instances. For example, the performance model of the functional module i and the correlation coefficient in the fluctuation coefficient model may be determined based on the obtained running time of each functional module.

It should be understood that the foregoing model is an example, and the foregoing model may be alternatively represented in another form, for example, a neural network model.

Step 633: Predict, based on the performance models of the plurality of functional modules of the application, running performance of the plurality of functional modules in a case in which the plurality of functional modules exclusively occupy resources.

In other words, the running performance of the plurality of functional modules in a case in which the plurality of functional modules exclusively occupy candidate resource scales corresponding to the plurality of functional modules is predicted based on the performance models of the plurality of functional modules of the application.

For example, step 633 may include: predicting, based on first performance models of the plurality of functional modules of the application, running performance of the plurality of functional modules in a case in which the plurality of functional modules exclusively occupy resources.

For example, step 634 may include: predicting, based on second performance models of the plurality of functional modules of the application and interference between the plurality of functional modules, running performance of the plurality of functional modules in a case in which the plurality of functional modules exclusively occupy resources.

For example, the running performance of the plurality of functional modules in a case in which the plurality of functional modules exclusively occupy the resources may be represented by a performance matrix of the plurality of functional modules. The performance matrix indicates running performance of different functional modules in a case in which the different functional modules exclusively occupy different resources. A dimension of the performance matrix may be $|C| \times N$, where $|C|$ indicates a quantity of the plurality of functional modules. One row in the performance matrix corresponds to one functional module, and one column in the performance matrix corresponds to one resource scale, for example, a quantity of processes. Each element in the performance matrix indicates running performance of a functional module corresponding to a row in which the element is located in a case in which the functional module exclusively occupies a resource scale corresponding to a column in which the element is located. The candidate resource scales corresponding to the plurality of functional modules are resource scales in the performance matrix.

Predicting the running performance of the plurality of functional modules in a case in which the plurality of functional modules exclusively occupy the candidate resource scales corresponding to the plurality of functional modules is predicting the element in the performance matrix of the plurality of modules.

The following describes an example of a manner for determining the element in the performance matrix.

As described above, the running performance data of the plurality of application instances includes the running performance data of the plurality of application instances in the plurality of sample resource scale combinations.

If the running performance data of the plurality of application instances includes running performance data of the functional module in a case in which the functional module exclusively occupies the resource, the running performance data of the functional module in a case in which the functional module exclusively occupies the resource may be used as an element at a location indicated by the functional module and the resource in the performance matrix. This manner corresponds to Example 3 in the method 500.

For example, the running performance data of the plurality of application instances includes running performance data of the functional module i in a case in which the functional module i exclusively occupies $n_i$ processes, and the running performance data of the functional module i in a case in which the functional module i exclusively occupies the $n_i$ processes may be used as an element at $(i, n_i)$ in the performance matrix. In this case, the functional module i may be used as an example of the third task, and the $n_i$ processes may be used as an example of the third candidate resource scale corresponding to the third task.

For running performance data of the functional module in a case in which the functional module does not exclusively occupy the resource in the running performance data of the plurality of application instances, a fluctuation coefficient of the functional module may be calculated via a fluctuation coefficient model of the functional module, and performance inverse resolution is performed based on the fluctuation coefficient, to predict running performance of the functional module in a case in which the functional module exclusively occupies the resource. The predicted running performance of the functional module in a case in which the functional module exclusively occupies the resource may be used as an element at a location indicated by the functional module and the resource in the performance matrix. This manner corresponds to Example 2 in the method 500.

For example, the running performance data of the plurality of application instances includes running performance data of the functional module i in a case in which the functional module i does not exclusively occupy the $n_i$ processes. A sample resource corresponding to the functional module i is indicated by a sample resource allocation scheme. In the sample resource allocation scheme, at least one of the $n_i$ processes is also allocated to another functional module. A fluctuation coefficient of the functional module is calculated based on the sample resource allocation scheme, and performance inverse resolution is performed on the running performance data of the functional module i in a case in which the functional module i does not exclusively occupy the $n_i$ processes. An obtained result may be used as an element at $(i, n_i)$ in the performance matrix. In this case, the functional module i may be used as an example of the second task, and the $n_i$ processes may be used as an example of the second candidate resource scale corresponding to the second task.

For an element at a location other than locations corresponding to the plurality of sample resource scale combinations in the performance matrix, a performance model of each functional module may be used to predict running performance of each functional module in a case in which the functional module exclusively occupies a resource. This manner corresponds to Example 1 in the method 500.

Because the performance model of each functional module is obtained by fitting the performance data of the plurality of application instances in the plurality of sample resource scale combinations, accuracy of predicting, via the performance model of each functional module, running performance of each functional module under a parameter around the plurality of sample resource scale combinations is higher. Therefore, the running performance of each functional module under the parameter around the plurality of sample resource scale combinations may be predicted based on only the performance model of each module.

For another part that is not completely supplemented in the performance matrix, a matrix supplement manner may be used for repairing and filling.

Running time of different functional modules is similar, and a performance matrix obtained after impact of the fluctuation coefficient is removed is low-ranked.

For example, a complete performance matrix may be obtained by solving the following minimization problem.

minimize $\|Z\|_*$; and

subject to

$$\sum_{(a,b)\in\Omega}(X_{ab}-Z_{ab})^2\leq\delta.$$

$X_{ab}$ indicates a value at an observed location (a, b) in the performance matrix, and $\Omega$ a set of locations. Z represents an original matrix, $\|Z\|_*$ indicates a kernel norm of Z, $Z_{ab}$ indicates a location (a, b) in the original matrix Z, and $\delta$ indicates a small amount.

It should be understood that the foregoing manner for determining the element in the performance matrix is merely an example, and constitutes no limitation on the solution in embodiments of this application.

Step 640: Determine a target resource allocation scheme based on the running performance of each functional module in a case in which the functional module exclusively occupies the resource.

The target resource allocation scheme indicates a target resource corresponding to each functional module. In other words, the target resource allocation scheme indicates a target resource allocated to each functional module.

For example, step 640 may be implemented by using the following steps.

641: Determine a feasible resource scale combination.

For example, the feasible resource scale combination may be determined by enumerating all candidate resource scale combinations in the performance matrix.

Enumeration space in this manner is excessively large, and it is difficult to efficiently determine the target resource allocation scheme from the enumeration space in a subsequent processing process.

This embodiment of this application provides a search-pruning-based solution. In this solution, the feasible resource scale combination can be quickly determined. Specifically, in this solution, search space in a subsequent process of determining target resource allocation is reduced through pruning processing, and search efficiency is improved, so that the target resource allocation scheme is quickly determined.

A pruning operation is performed by globally searching for each functional module (that is, each row of elements) in the performance matrix. All functional modules are traversed to complete the pruning operation.

For example, the pruning operation is performed based on resource module efficiency of the element in the performance matrix. When the resource module efficiency of the element is lower than an efficiency threshold, the element is pruned. A functional module corresponding to a row in which an element in a pruned performance matrix is located is the sixth task in the method 500, and a resource scale corresponding to a column in which the element is located is the target candidate resource scale corresponding to the sixth task.

When the resource module efficiency of the element is lower than the efficiency threshold, it may be considered that resource utilization efficiency of the module in the current resource is low, which leads to a waste of resources, and the element may be removed.

Resource module efficiency of each element is a ratio of running performance of the functional module to a scale of the resource.

Further, the pruning operation is performed based on the resource scale corresponding to the element in the performance matrix. When the resource scale corresponding to the element is small, parallel efficiency of tasks is low, and overall running performance of the plurality of tasks is affected, and the element may be removed.

It should be understood that the foregoing pruning manner is merely an example. For another solution, refer to the method 500. Details are not described herein again.

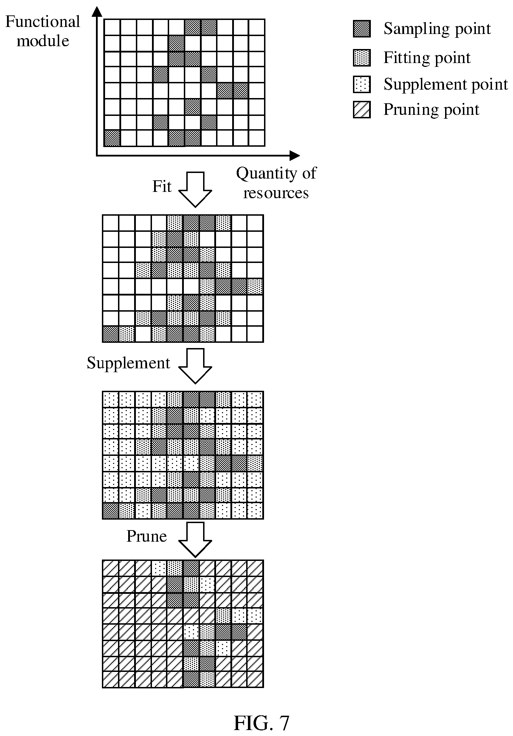

The following describes a processing procedure of the performance matrix by using an example with reference to FIG. 7.

Performance data of application instances in a plurality of sample resource scale combinations is obtained in a sampling manner. A fluctuation coefficient of each functional module is calculated, and performance inverse resolution is performed to obtain running performance of each functional module in a case in which the functional module exclusively occupies a corresponding resource. The running performance is used as a sampling point on the performance matrix. Then, internal feature fitting is applied, that is, running performance around the sampling point is predicted via a performance model of each functional module, to obtain a fitting point on the performance matrix. Predicting the running performance around the sampling point may also be referred to as interpolation or extension around the sampling point. As shown in FIG. 7, interpolation or extension is performed only around the sampling point, which helps ensure accuracy of the predicted running performance. A missing element in the current performance matrix is repaired in a matrix supplement manner, that is, a supplement point on the performance matrix is obtained. Then, pruning processing is performed on a pruning point in the performance matrix, to obtain a target candidate resource scale corresponding to each functional module through screening. For example, the pruning point may be determined based on marginal effect, that is, determined based on the efficiency threshold. A combination of target candidate resource scales corresponding to each functional module may be used as the feasible resource scale combination.

642: Determine the target resource allocation scheme based on the feasible resource scale combination.

For example, step 642 may include: enumerating all resource allocation schemes in the feasible resource scale combination, and determining the target resource allocation scheme from the resource allocation schemes.

This manner has high complexity, requires long running time, and is difficult to efficiently determine the target resource allocation scheme in the manner.

This embodiment of this application provides an allocation manner in which a bin packing algorithm is used, to implement efficient resource allocation.

Feasible resource scale combinations are traversed based on the pruned performance matrix, and for each of the resource scale combinations, the bin packing algorithm is executed to minimize an overall packing height. Therefore, a location of a resource corresponding to each functional module may be obtained, to determine an optimal resource allocation scheme in the resource scale combination. Running time of each functional module in a case in which the functional module does not exclusively occupy a resource is restored based on a fluctuation coefficient of the functional module, to determine overall running time of the application.

For example, for each resource scale combination, a fast two-dimensional first-fit decreasing height (twodimension first-fit decreasing height, 2D-FFDH) bin packing algorithm is improved, and forward packing is performed once and then reverse packing is performed. Two layers are used as a group, complexity is nlogn, and n represents a quantity of boxes, that is, a quantity of functional modules in embodiments of this application, to minimize the overall packing height.

The following uses a resource scale combination in the feasible resource scale combination as an example for description.

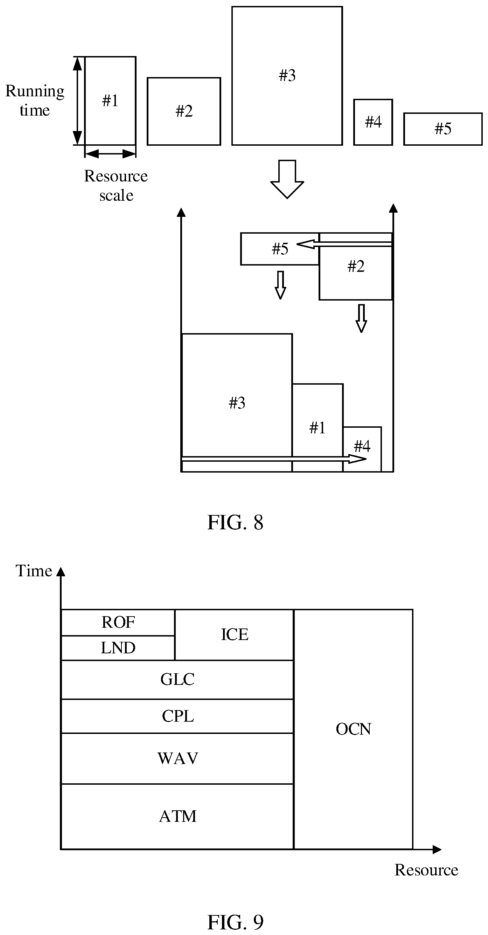

For example, as shown in FIG. 8, the application may include five functional modules. The feasible resource scale combination is a combination of target candidate resource scales corresponding to the five functional modules in the pruned performance matrix.

Each functional module is abstracted as a matrix based on a corresponding element in the performance matrix. A width of the matrix corresponds to a resource scale allocated to the functional module in the resource scale combination, and a length of the matrix corresponds to running time of the functional module in a case in which the functional module exclusively occupies the resource scale. For example, the functional module i is abstracted as a matrix, a width of the matrix corresponds to a quantity $n_i$ of processes allocated to the functional module in the resource scale combination, and a length of the matrix corresponds to a value at $(i, n_i)$ in the performance matrix.

As shown in FIG. 8, matrices corresponding to all functional modules are put into a resource pool according to the bin packing algorithm, to minimize an overall height. For example, a width of the resource pool may be an available resource scale.

Determining the target resource allocation scheme according to the 2D-FFDH bin packing algorithm may include the following steps:

For each resource scale combination, step S1 to step S4 are separately performed.

S1: The functional modules are sorted in descending order of running time. The functional modules are placed in the order.

For example, the five functional modules in FIG. 8 are arranged in descending order of running time, and an obtained sequence may be: a functional module #3, a functional module #1, a functional module #2, a functional module #4, and a functional module #5.

S2: Two layers are used as a group, and the functional modules are placed from left to right starting from a lower layer. If remaining space on the right side at the lower layer in the resource pool is greater than or equal to a quantity of resources corresponding to a to-be-placed functional module, the functional module is placed at the lower layer. The remaining space on the right side at the lower layer is calculated. If the remaining space on the right side at the lower layer in the resource pool is less than the quantity of resources corresponding to the to-be-placed functional module, the functional module is placed at an upper layer, and placing is performed from right to left at the upper layer. Remaining space on the left side at the upper layer is calculated. The to-be-placed functional module is determined based on the placement order of the functional modules in step S1. The remaining space is greater than or equal to a quantity of resources corresponding to the functional module, that is, a width of the remaining space is greater than or equal to a width of a matrix corresponding to the functional module. The remaining space is less than the quantity of resources corresponding to the functional module, that is, the width of the remaining space is less than the width of the matrix corresponding to the functional module.

For example, as shown in FIG. 8, the functional module #3 is first placed at the lower layer, and remaining space on the left side at the lower layer is calculated. A to-be-placed functional module after the functional module #3 is the functional module #1, and remaining space on the right side at the lower layer is greater than a quantity of resources corresponding to the functional module #1. The functional module #1 is placed at the lower layer, and remaining space on the right side at the lower layer after the functional module #1 is placed is calculated. A to-be-placed functional module after the functional module #1 is the functional module #2. Remaining space on the right side at the lower layer is less than a quantity of resources corresponding to the functional module #2, and the functional module #2 is placed on the rightmost side at the upper layer. Remaining space on the left side at the upper layer after the functional module #2 is placed is calculated, and by analogy.

S3: If both the remaining space at the lower layer and the remaining space at the upper layer are smaller than the resource corresponding to the to-be-placed functional module, another two layers are enabled to place the functional module. Step S2 is repeated until all the functional modules are placed, to obtain a target candidate resource allocation scheme in the resource scale combination.

S4: Fluctuation coefficients of the five functional modules are calculated through module coupling. Running time of each functional module in a case in which the functional module does not exclusively occupy a resource is obtained based on the fluctuation coefficient of each functional module. Predicted running time of the application is determined based on the running time of each functional module in a case in which the functional module does not exclusively occupy the resource.

In other words, the fluctuation coefficients of the five functional modules are calculated based on the target candidate resource allocation scheme in the resource scale combination.

For example, in the target candidate resource allocation scheme, a resource corresponding to each functional module may be indicated by a start location of the resource corresponding to the functional module and a resource scale corresponding to the functional module.

For example, the predicted running time of the application may be determined based on the application model in step 631 and the running time of each functional module in a case in which the functional module does not exclusively occupy the resource.

S5: Predicted running time of applications in resource scale combination is traversed, and a resource allocation scheme corresponding to minimum predicted running time is used as the target resource allocation scheme.

It should be understood that the foregoing bin packing algorithm is merely an example, and this is not limited in embodiments of this application. For example, another algorithm may be selected based on a time requirement of an algorithm, a precision requirement of an output result, and the like to determine the target resource allocation scheme.

Step 640 corresponds to step 530 in the method 500. For specific descriptions, refer to related descriptions in step 530.

Tasks corresponding to the functional modules may be assigned to a processor based on the target resource allocation scheme, and the processor performs calculation.

In the solution of this embodiment of this application, the process may be bound to the processor core. In this way, an optimal resource allocation scheme can be globally searched, to avoid a case in which the optimal resource allocation scheme cannot be obtained because a computing power node does not have global information. In addition, in the solution in this embodiment of this application, the process is bound to the processor core, so that refined computing power allocation is implemented, and secondary scheduling of a computing power node kernel is not required. In other words, the computing power node does not need to schedule the processor core for the process, thereby avoiding overheads caused by secondary scheduling.

In the solution in this embodiment of this application, the behavior characteristic of the application is identified, and the resource may be globally calculated for each functional module, to obtain a fine-grained resource allocation scheme. This helps implement optimal matching between the application and the computing power resource, thereby improving overall end-to-end running performance. As a quantity of functional modules that are executed in parallel in the application increases, the solution in this embodiment of this application improves overall running performance more obviously.

The following describes the method 600 by using an application of the CESM as an example.

For example, functional modules enabled in the CESM may include ATM, LND, ICE, ROF, GLC, WAV, OCN, and a coupling component CPL. According to the solution in this embodiment of this application, a corresponding process resource may be allocated to the foregoing functional module. A same process resource is allowed to be allocated to a plurality of functional modules.

Specifically, a resource allocation process of the CESM may include the following steps.

(1) Obtain related information of the CESM. The related information of the CESM includes information about a plurality of functional modules and information about an available resource scale.

The information about the plurality of functional modules indicates the ATM, the LND, the ICE, the ROF, the GLC, the WAV, the OCN, and the coupling component CPL.

The information about the available resource scale indicates an available resource of HPC.

(2) Obtain a program running instruction of the CESM, and perform short-time pre-execution of the CESM in a plurality of sample resource allocation schemes, to obtain running performance data of a plurality of application instances. There are a plurality of combinations of sample resource scales corresponding to the functional modules indicated by the plurality of sample resource allocation schemes.

(3) Fluctuation coefficients of the functional modules are respectively calculated based on the plurality of sample resource allocation schemes.

(4) Performance inverse resolution is performed on the running performance data of the plurality of application instances based on the fluctuation coefficients of the functional modules, to obtain running time of the functional modules in a case in which the functional modules exclusively occupy resources, and the running time is used as a sampling point in the performance matrix.

(5) A complete performance matrix is obtained in a fitting interpolation manner and a low-rank supplement manner.

(6) Pruning processing is performed on the performance matrix to obtain a feasible resource scale combination.

(7) Feasible resource scale combinations are traversed, and for each feasible resource scale combination, a target candidate resource allocation scheme is determined according to a 2D-FFDH quick bin packing algorithm; fluctuation coefficients of the functional modules are calculated based on the target candidate resource allocation scheme; running time of functional modules in parallel execution is calculated in the target candidate resource allocation scheme based on the fluctuation coefficients of the functional modules; and overall running time of the application is calculated based on running time of the parallel execution. A target candidate resource allocation scheme corresponding to an optimal overall running time obtained after the traversal is used as the target resource allocation scheme. For example, the target resource allocation scheme may be shown in FIG. 9.

(8) Resources are allocated to the functional modules in the application based on the target resource allocation scheme, to implement parallel execution of the plurality of functional modules.

Table 1 shows a performance test result of the CESM in a test environment. As shown in Table 1, the performance test is separately performed based on the CESM data set B1850 G and the CESM data set BW1850. A resolution (resolution, res) of the scenario is f09_g17, a quantity NTHRD of threads of each process is 1, and experiment simulation time is five days.

A hardware structure used in the test environment is non-uniform memory access (non-uniform memory access, NUMA) structure node (node), including: two CPU sockets (sockets), 52 cores (52 cores), and a random access memory (RAM) of 768 GB.

Table 1

| Dataset | Data amount | Related solution layout | Optimization result | Performance improvement |
|---------|-------------|-------------------------|---------------------|-------------------------|
| B1850 G | ~20 G | 519s | 330s | 57% |
| BW1850 | ~100 G | 14788s | 11372s | 30% |

As shown in Table 1, compared with the resource layout manner in the related solution, performance in the solution in this embodiment of this application is improved by more than 30%.

One or more users may submit a plurality of job tasks to a computing system, for the system to centrally manage and run these tasks. The computing system may be referred to as a batch job processing system or a batch processing system. The solutions in embodiments of this application may be applied to a resource allocation scenario of the batch processing system, to allocate computing power resources to the plurality of job tasks.

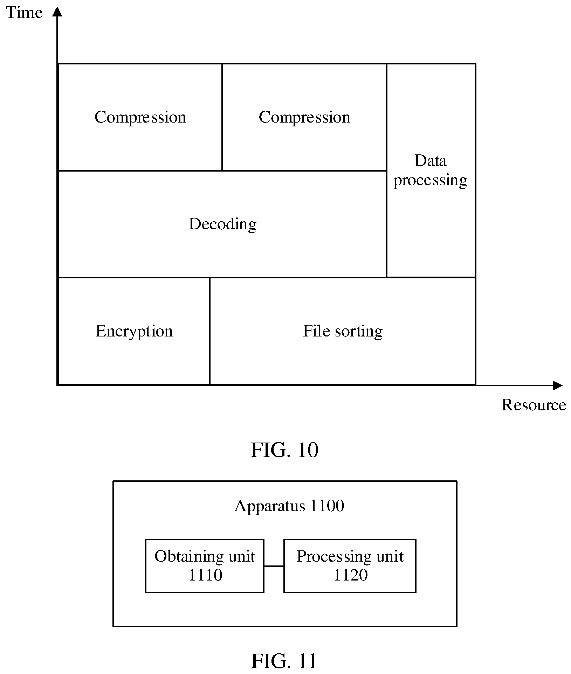

FIG. 10 shows a resource allocation scheme in a batch processing system with a mixed layout of a plurality of job tasks. As shown in FIG. 10, the plurality of job tasks include a data processing task, a decoding task, an encryption task, a file sorting task, and two compression tasks. The plurality of job tasks may be used as the plurality of tasks in the method 500. According to the solutions in embodiments of this application, computing power resources can be allocated to the plurality of job tasks, and overall running performance of the plurality of job tasks, for example, overall running time of the plurality of tasks, is optimized while system resource utilization is improved.

The following describes apparatus embodiments of this application with reference to FIG. 11 to FIG. 14. It should be understood that the descriptions of the method embodiments correspond to the descriptions of the apparatus embodiments. For specific descriptions, refer to the foregoing related descriptions. To avoid unnecessary repetition, repeated descriptions are properly omitted in the following when the apparatus embodiments are described.

FIG. 11 is a block diagram of a resource allocation apparatus according to an embodiment of this application. An apparatus 1100 shown in FIG. 11 may be configured to perform the resource allocation method in embodiments of this application, for example, the method 500 or the method 600.

As shown in FIG. 11, the apparatus 1100 includes an obtaining unit 1110 and a processing unit 1120.

In a possible implementation, the obtaining unit is configured to obtain running performance data of each task in a plurality of tasks, where the running performance data of each task in the plurality of tasks includes running performance of the task in a sample resource scale corresponding to the task. The processing unit is configured to: determine, based on the running performance data of each task in the plurality of tasks, running performance of each task in the plurality of tasks in a case in which the task exclusively occupies a candidate resource scale corresponding to the task; and determine, based on the running performance of each task in the plurality of tasks in a case in which the task exclusively occupies the candidate resource scale corresponding to the task, a target resource corresponding to each task in the plurality of tasks.

Optionally, the target resource corresponding to each task includes one or more processes corresponding to the task, and the one or more processes are separately bound to one or more slots.

Optionally, the plurality of processes are a plurality of consecutive processes, and the plurality of slots are a plurality of consecutive slots.

Optionally, the plurality of tasks include a first task, and the processing unit is specifically configured to: construct a first performance model of the first task based on the running performance data of the first task, where the first performance model of the first task is used to predict running performance of the first task in a case in which the first task exclusively occupies a resource scale input into the performance model of the first task; and determine, based on the first performance model of the first task, running performance of the first task in a case in which the first task exclusively occupies a first candidate resource scale corresponding to the first task, where the candidate resource scale corresponding to the first task includes the first candidate resource scale corresponding to the first task.

Optionally, the candidate resource scale corresponding to each task is a part of all candidate resource scales corresponding to the task, and the part of the candidate resource scales corresponding to the task and running performance of each task in a case in which the task exclusively occupies the part of the candidate resource scales corresponding to the task meet a first preset condition.

Optionally, the first preset condition includes: a ratio of the running performance of each task in a case in which the task exclusively occupies the part of the candidate resource scales corresponding to the task to the part of the candidate resource scales corresponding to the task is greater than or equal to a first threshold, where the first threshold is a threshold of utilization efficiency of the task on the resource scale.

Optionally, the processing unit is specifically configured to: determine target candidate resource allocation schemes in a plurality of resource scale combinations based on the running performance of each task in the plurality of tasks in a case in which the task exclusively occupies the part of the candidate resource scales corresponding to the task, where the plurality of resource scale combinations are determined based on a combination of the part of the candidate resource scales corresponding to the task, and a target candidate resource allocation scheme in each resource scale combination in the plurality of resource scale combinations indicates a target candidate resource corresponding to each task in the plurality of tasks in the resource scale combination; determine fluctuation coefficients that are of a plurality of tasks that correspond to the target candidate resource allocation scheme in each resource scale combination in the plurality of resource scale combinations, where the fluctuation coefficients that are of the plurality of tasks and that correspond to the target candidate resource allocation scheme in each resource scale combination respectively indicate differences between running performance of the plurality of tasks in parallel execution in the target candidate resource allocation scheme in each resource scale combination and running performance of the plurality of tasks in a case in which the plurality of tasks exclusively occupy resource scales corresponding to the tasks in each resource scale combination; predict, based on the fluctuation coefficients that are of the plurality of tasks and that correspond to the target candidate resource allocation scheme in each resource scale combination, the running performance of the plurality of tasks in parallel execution in the target candidate resource allocation scheme in each resource scale combination; and determine, from the target candidate resource allocation schemes in the plurality of resource scale combinations, the target resource corresponding to each task in the plurality of tasks based on running performance of the plurality of tasks in parallel execution in the target candidate resource allocation schemes in the plurality of resource scale combinations.

Optionally, the processing unit is specifically configured to: determine, from candidate resource allocation schemes in each resource scale combination, the target candidate resource allocation scheme in each resource scale combination based on the running performance of each task in the plurality of tasks in a case in which the task exclusively occupies the part of the candidate resource scales corresponding to the task, where candidate resources that correspond to each task and that are indicated by the candidate resource allocation schemes in each resource scale combination are consecutive, and overall running performance of the plurality of tasks in a case in which the plurality of tasks exclusively occupy the resource scales corresponding to the tasks in each resource scale combination in the target candidate resource allocation scheme in the resource scale combination is better than overall running performance of the plurality of tasks in a case in which the plurality of tasks exclusively occupy resource scales corresponding to the tasks in each resource scale combination in another candidate resource allocation scheme in the resource scale combination.

Optionally, the processing unit is specifically configured to: construct fluctuation coefficient models of the plurality of tasks based on running performance data of the plurality of tasks, where the fluctuation coefficient models of the plurality of tasks are respectively used to predict fluctuation coefficients that are of the plurality of tasks and that correspond to resource allocation schemes input into the fluctuation coefficient models of the plurality of tasks; and respectively determine, based on the fluctuation coefficient models of the plurality of tasks, the fluctuation coefficients that are of the plurality of tasks and that correspond to the target candidate resource allocation scheme in each resource scale combination in the plurality of resource scale combinations.

Optionally, the plurality of tasks include tasks corresponding to a plurality of applications, and each task in the plurality of applications corresponds to one task.

Optionally, the plurality of tasks include tasks corresponding to a plurality of functional modules in one application, and each functional module in the plurality of functional modules corresponds to one task.

The term "unit" herein may be implemented in a form of software and/or hardware. This is not specifically limited.

For example, the "unit" may be a software program, a hardware circuit, or a combination thereof that implements the foregoing function. For example, the following uses a processing unit as an example to describe an implementation of the processing unit. Similarly, for implementations of an obtaining unit and an output unit, refer to the implementation of the processing unit.

The processing unit is used as an example of a software functional unit, and the processing unit may include code running on a computing instance. The computing instance may include at least one of a physical host (computing device), a virtual machine, and a container. Further, there may be one or more computing instances. For example, the processing unit may include code running on a plurality of hosts/virtual machines/containers. It should be noted that the plurality of hosts/virtual machines/containers used to run the code may be distributed in a same region (region), or may be distributed in different regions. Further, the plurality of hosts/virtual machines/containers used to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers used to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions. Interconnection between VPCs is implemented through the communication gateway.

The processing unit is used as an example of a hardware functional unit, and the processing unit may include at least one computing device such as a server. Alternatively, the processing unit may be implemented via an application-specific integrated circuit (application-specific integrated circuit, ASIC), a device implemented via a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of computing devices included in the processing unit may be distributed in a same region, or may be distributed in different regions. The plurality of computing devices included in the processing unit may be distributed in a same AZ, or may be distributed in different AZs. Similarly, the plurality of computing devices included in the processing unit may be distributed in a same VPC, or may be distributed in a plurality of VPCs. The plurality of computing devices may be any combination of computing devices such as a server, an ASIC, a PLD, a CPLD, an FPGA, and a GAL.

Therefore, modules in the examples described in embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It should be noted that, in another embodiment, the processing unit may be configured to perform any step in the resource allocation method, the obtaining unit may be configured to perform any step in the resource allocation method, the output unit may be configured to perform any step in the resource allocation method, steps implemented by the obtaining unit, the processing unit, and the output unit may be specified as required, and all functions of the apparatus 1100 are implemented by implementing different steps in the resource allocation method via the obtaining unit, the processing unit, and the output unit.

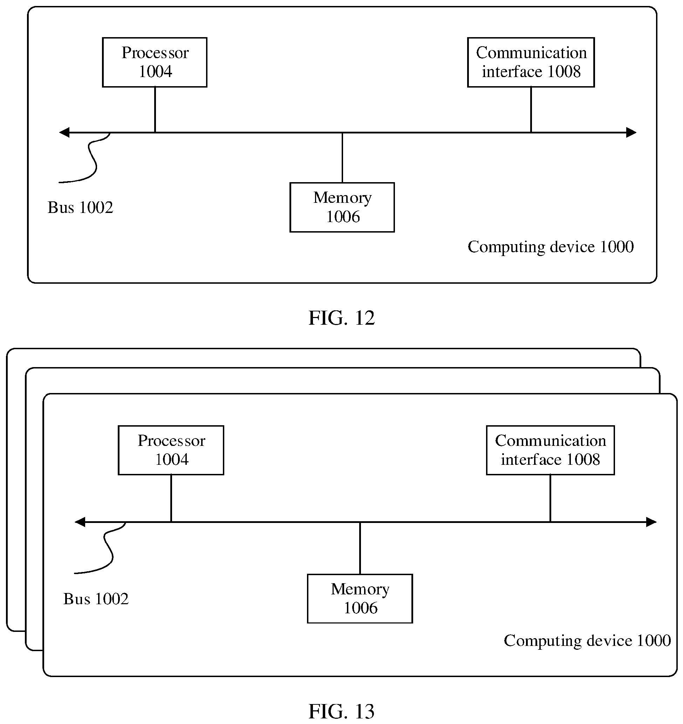

This application further provides a computing device 1000. As shown in FIG. 12, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 1004 may include a path for transmitting information between components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code, and the processor 1004 executes the executable program code to separately implement functions of the foregoing obtaining unit and unit module, so as to implement the resource allocation method. In other words, the memory 1006 stores an instruction used to perform the resource allocation method.

The communication interface 1003 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 13, the computing device cluster includes at least one computing device 1000. The memory 1006 in one or more computing devices 1000 in the computing device cluster may store a same instruction used to perform the resource allocation method.

In some possible implementations, the memory 1006 in the one or more computing devices 1000 in the computing device cluster may also separately store some instructions used to perform the resource scheduling method. In other words, a combination of the one or more computing devices 1000 may jointly execute instructions used to perform the resource allocation method.

It should be noted that memories 1006 in different computing devices 1000 in the computing device cluster may store different instructions that are respectively used to execute some functions of the resource allocation apparatus. For example, instructions stored in the memories 1006 in different computing devices 1000 each may implement a function of one or more of the obtaining unit and the processing unit.

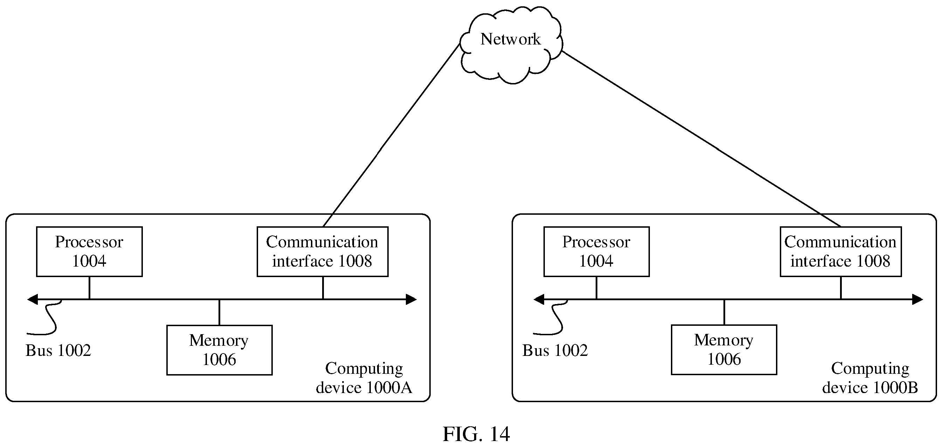

In some possible implementations, the one or more computing devices in the computing device cluster may be connected over a network. The network may be a wide area network, a local area network, or the like. FIG. 14 shows a possible implementation. As shown in FIG. 14, two computing devices 1000A and 1000B are connected over a network. Specifically, each computing device is connected to the network through a communication interface of the computing device. In this possible implementation, a memory 1006 in the computing device 1000A stores an instruction used to perform a function of the obtaining unit. In addition, a memory 1006 in the computing device 1000B stores an instruction used to perform a function of the processing unit.

It should be understood that a function of the computing device 1000A shown in FIG. 14 may alternatively be completed by a plurality of computing devices 1000. Similarly, a function of the computing device 1000B may alternatively be completed by a plurality of computing devices 1000.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the method in embodiments of this application.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the method in embodiments of this application, or instruct the computing device to perform the method in embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource allocation method, comprising:

   obtaining running performance data of each task in a plurality of tasks, wherein the running performance data of each task in the plurality of tasks comprises running performance of the task in a sample resource scale corresponding to the task;
   determining, based on the running performance data of each task in the plurality of tasks, running performance of each task in the plurality of tasks in a case in which the task exclusively occupies a candidate resource scale corresponding to the task; and
   determining, based on the running performance of each task in the plurality of tasks in a case in which the task exclusively occupies the candidate resource scale corresponding to the task, a target resource corresponding to each task in the plurality of tasks.

2. The method according to claim 1, wherein the target resource corresponding to each task comprises one or more processes corresponding to the task, and the one or more processes are separately bound to one or more resource slots.

3. The method according to claim 2, wherein the plurality of processes are a plurality of consecutive processes, and the plurality of resource slots are a plurality of consecutive resource slots.

4. The method according to any one of claims 1 to 3, wherein the plurality of tasks comprise a first task, and determining, based on running performance data of the first task, running performance of the first task in a case in which the first task exclusively occupies a candidate resource scale corresponding to the first task comprises:

constructing a first performance model of the first task based on the running performance data of the first task, wherein the first performance model of the first task is used to predict running performance of the first task in a case in which the first task exclusively occupies a resource scale input into the performance model of the first task; and

determining, based on the first performance model of the first task, running performance of the first task in a case in which the first task exclusively occupies a first candidate resource scale corresponding to the first task, wherein the candidate resource scale corresponding to the first task comprises the first candidate resource scale corresponding to the first task.

5. The method according to any one of claims 1 to 4, wherein the candidate resource scale corresponding to each task is a part of all candidate resource scales corresponding to the task, and the part of the candidate resource scales corresponding to the task and running performance of each task in a case in which the task exclusively occupies the part of the candidate resource scales corresponding to the task meet a first preset condition.

6. The method according to claim 5, wherein the first preset condition comprises: a ratio of the running performance of each task in a case in which the task exclusively occupies the part of the candidate resource scales corresponding to the task to the part of the candidate resource scales corresponding to the task is greater than or equal to a first threshold, wherein the first threshold is a threshold of utilization efficiency of the task on the resource scale.

7. The method according to claim 5 or 6, wherein the determining, based on the running performance of each task in the plurality of tasks in a case in which the task exclusively occupies the candidate resource scale corresponding to the task, a target resource corresponding to each task in the plurality of tasks comprises:

determining target candidate resource allocation schemes in a plurality of resource scale combinations based on the running performance of each task in the plurality of tasks in a case in which the task exclusively occupies the part of the candidate resource scales corresponding to the task, wherein the plurality of resource scale combinations are determined based on a combination of the part of the candidate resource scales corresponding to the task, and a target candidate resource allocation scheme in each resource scale combination in the plurality of resource scale combinations indicates a target candidate resource corresponding to each task in the plurality of tasks in the resource scale combination;

determining fluctuation coefficients that are of a plurality of tasks that correspond to the target candidate resource allocation scheme in each resource scale combination in the plurality of resource scale combinations, wherein the fluctuation coefficients that are of the plurality of tasks and that correspond to the target candidate resource allocation scheme in each resource scale combination respectively indicate differences between running performance of the plurality of tasks in parallel execution in the target candidate resource allocation scheme in each resource scale combination and running performance of the plurality of tasks in a case in which the plurality of tasks exclusively occupy resource scales corresponding to the tasks in each resource scale combination;

predicting, based on the fluctuation coefficients that are of the plurality of tasks and that correspond to the target candidate resource allocation scheme in each resource scale combination, the running performance of the plurality of tasks in parallel execution in the target candidate resource allocation scheme in each resource scale combination; and

determining, from the target candidate resource allocation schemes in the plurality of resource scale combinations, the target resource corresponding to each task in the plurality of tasks based on running performance of the plurality of tasks in parallel execution in the target candidate resource allocation schemes in the plurality of resource scale combinations.

8. The method according to claim 7, wherein the determining target candidate resource allocation schemes in a plurality of resource scale combinations based on the running performance of each task in the plurality of tasks in a case in which the task exclusively occupies the part of the candidate resource scales corresponding to the task comprises: determining, from candidate resource allocation schemes in each resource scale combination, the target candidate resource allocation scheme in each resource scale combination based on the running performance of each task in the plurality of tasks in a case in which the task exclusively occupies the part of the candidate resource scales corresponding to the task, wherein candidate resources that correspond to each task and that are indicated by the candidate resource allocation schemes in each resource scale combination are consecutive, and overall running performance of the plurality of tasks in a case in which the plurality of tasks exclusively occupy the resource scales corresponding to the tasks in each resource scale combination in the target candidate resource allocation scheme in the resource scale combination is better than overall running performance of the plurality of tasks in a case in which the plurality of tasks exclusively occupy resource scales corresponding to the tasks in each resource scale combination in another candidate resource allocation scheme in the resource scale combination.

9. The method according to claim 7 or 8, wherein the determining fluctuation coefficients that are of a plurality of tasks that correspond to the target candidate resource allocation scheme in each resource scale combination in the plurality of resource scale combinations comprises:

constructing fluctuation coefficient models of the plurality of tasks based on running performance data of the plurality of tasks, wherein the fluctuation coefficient models of the plurality of tasks are respectively used to predict fluctuation coefficients that are of the plurality of tasks and that correspond to resource allocation schemes input into the fluctuation coefficient models of the plurality of tasks; and
respectively determining, based on the fluctuation coefficient models of the plurality of tasks, the fluctuation coefficients that are of the plurality of tasks and that correspond to the target candidate resource allocation scheme in each resource scale combination in the plurality of resource scale combinations.

10. The method according to any one of claims 1 to 9, wherein the plurality of tasks comprise tasks corresponding to a plurality of applications, and each task in the plurality of applications corresponds to one task.

11. The method according to any one of claims 1 to 9, wherein the plurality of tasks comprise tasks corresponding to a plurality of functional modules in one application, and each functional module in the plurality of functional modules corresponds to one task.

12. A resource allocation apparatus, comprising:

an obtaining unit, configured to obtain running performance data of each task in a plurality of tasks, wherein the running performance data of each task in the plurality of tasks comprises running performance of the task in a sample resource scale corresponding to the task; and
a processing unit, configured to:

determine, based on the running performance data of each task in the plurality of tasks, running performance of each task in the plurality of tasks in a case in which the task exclusively occupies a candidate resource scale corresponding to the task; and
determine, based on the running performance of each task in the plurality of tasks in a case in which the task exclusively occupies the candidate resource scale corresponding to the task, a target resource corresponding to each task in the plurality of tasks.

13. The apparatus according to claim 12, wherein the target resource corresponding to each task comprises one or more processes corresponding to the task, and the one or more processes are separately bound to one or more resource slots.

14. The apparatus according to claim 13, wherein the plurality of processes are a plurality of consecutive processes, and the plurality of resource slots are a plurality of consecutive resource slots.

15. The apparatus according to any one of claims 12 to 14, wherein the plurality of tasks comprise a first task, and the processing unit is specifically configured to:

construct a first performance model of the first task based on the running performance data of the first task, wherein the first performance model of the first task is used to predict running performance of the first task in a case in which the first task exclusively occupies a resource scale input into the performance model of the first task;

and

determine, based on the first performance model of the first task, running performance of the first task in a case in which the first task exclusively occupies a first candidate resource scale corresponding to the first task, wherein the candidate resource scale corresponding to the first task comprises the first candidate resource scale corresponding to the first task.

16. The apparatus according to any one of claims 12 to 15, wherein the candidate resource scale corresponding to each task is a part of all candidate resource scales corresponding to the task, and the part of the candidate resource scales corresponding to the task and running performance of each task in a case in which the task exclusively occupies the part of the candidate resource scales corresponding to the task meet a first preset condition.

17. The apparatus according to claim 16, wherein the first preset condition comprises: a ratio of the running performance of each task in a case in which the task exclusively occupies the part of the candidate resource scales corresponding to the task to the part of the candidate resource scales corresponding to the task is greater than or equal to a first threshold, wherein the first threshold is a threshold of utilization efficiency of the task on the resource scale.

18. The apparatus according to claim 16 or 17, wherein the processing unit is specifically configured to:

determine target candidate resource allocation schemes in a plurality of resource scale combinations based on the running performance of each task in the plurality of tasks in a case in which the task exclusively occupies the part of the candidate resource scales corresponding to the task, wherein the plurality of resource scale combinations are determined based on a combination of the part of the candidate resource scales corresponding to the task, and a target candidate resource allocation scheme in each resource scale combination in the plurality of resource scale combinations indicates a target candidate resource corresponding to each task in the plurality of tasks in the resource scale combination;
determine fluctuation coefficients that are of a plurality of tasks that correspond to the target candidate resource allocation scheme in each resource scale combination in the plurality of resource scale combinations, wherein the fluctuation coefficients that are of the plurality of tasks and that correspond to the target candidate resource allocation scheme in each resource scale combination respectively indicate differences between running performance of the plurality of tasks in parallel execution in the target candidate resource allocation scheme in each resource scale combination and running performance of the plurality of tasks in a case in which the plurality of tasks exclusively occupy resource scales corresponding to the tasks in each resource scale combination;
predict, based on the fluctuation coefficients that are of the plurality of tasks and that correspond to the target candidate resource allocation scheme in each resource scale combination, the running performance of the plurality of tasks in parallel execution in the target candidate resource allocation scheme in each resource scale combination; and
determine, from the target candidate resource allocation schemes in the plurality of resource scale combinations, the target resource corresponding to each task in the plurality of tasks based on running performance of the plurality of tasks in parallel execution in the target candidate resource allocation schemes in the plurality of resource scale combinations.

19. The apparatus according to claim 18, wherein the processing unit is specifically configured to:
determine, from candidate resource allocation schemes in each resource scale combination, the target candidate resource allocation scheme in each resource scale combination based on the running performance of each task in the plurality of tasks in a case in which the task exclusively occupies the part of the candidate resource scales corresponding to the task, wherein candidate resources that correspond to each task and that are indicated by the candidate resource allocation schemes in each resource scale combination are consecutive, and overall running performance of the plurality of tasks in a case in which the plurality of tasks exclusively occupy the resource scales corresponding to the tasks in each resource scale combination in the target candidate resource allocation scheme in the resource scale combination is better than overall running performance of the plurality of tasks in a case in which the plurality of tasks exclusively occupy resource scales corresponding to the tasks in each resource scale combination in another candidate resource allocation scheme in the resource scale combination.

20. The apparatus according to claim 18 or 19, wherein the processing unit is specifically configured to:

construct fluctuation coefficient models of the plurality of tasks based on running performance data of the plurality of tasks, wherein the fluctuation coefficient models of the plurality of tasks are respectively used to predict fluctuation coefficients that are of the plurality of tasks and that correspond to resource allocation schemes input into the fluctuation coefficient models of the plurality of tasks; and

respectively determine, based on the fluctuation coefficient models of the plurality of tasks, the fluctuation coefficients that are of the plurality of tasks and that correspond to the target candidate resource allocation scheme in each resource scale combination in the plurality of resource scale combinations.

21. The apparatus according to any one of claims 12 to 20, wherein the plurality of tasks comprise tasks corresponding to a plurality of applications, and each task in the plurality of applications corresponds to one task.

22. The apparatus according to any one of claims 12 to 20, wherein the plurality of tasks comprise tasks corresponding to a plurality of functional modules in one application, and each functional module in the plurality of functional modules corresponds to one task.

23. A resource allocation apparatus, comprising a processor and a memory, wherein the processor is configured to execute instructions stored in the memory, so that the apparatus performs the method according to any one of claims 1 to 11.

24. A computing device cluster, comprising at least one computing device, wherein each computing device comprises a processor and a memory; and

the processor in the at least one computing device is configured to execute instructions stored in the memory in the at least one computing device, so that the computing device cluster performs the method according to any one of claims 1 to 11.

25. A computer-readable storage medium, comprising computer program instructions, wherein when the computer program instructions are executed by a computing device cluster, the computing device cluster performs the method according to any one of claims 1 to 11.

26. A computer program product comprising instructions, wherein when the instructions are run by a computing device cluster, the computing device cluster is enabled to perform the method according to any one of claims 1 to 11.

| Functional module | Functional module | Functional module | Functional module | Task parallelism |

Data parallelism

Process parallelism

| CPU | CPU | CPU | CPU | Computing power parallelism |

FIG. 1

Job task

User command/ Plug-in

User

Waiting queue

Node allocation

Task assignment

Computing power resource management system

OS scheduling

Task instance

CPU CPU

Computing power node

OS scheduling

Task instance

CPU CPU

Computing power node

Computing power resource

FIG. 2

FIG. 3

Job task

User

Waiting queue

Information collector 410

Data fusion device 420

Application analyzer 430

Resource allocator 440

Resource allocation apparatus 400

Computing power node

Computing power node

Computing power node

Computing power resource

FIG. 4

500

Obtain running performance data of each task in a plurality of tasks

510

Determine, based on the running performance data of each task in the plurality of tasks, running performance of each task in a case in which the task exclusively occupies candidate resource scales corresponding to the plurality of tasks

520

Determine, based on running performance of each task in the plurality of tasks in a case in which the task exclusively occupies a candidate resource scale corresponding to the task, a target resource corresponding to each task in the plurality of tasks

530

FIG. 5

600

| Obtain related information of an application | 610 |

| Obtain running performance data of a plurality of application instances of the application | 620 |

| Perform performance analysis based on the performance data of the plurality of application instances, to obtain running performance of each functional module in a case in which the functional module exclusively occupies a resource | 630 |

| Determine a target resource allocation scheme based on the running performance of each functional module in a case in which the functional module exclusively occupies the resource | 640 |

FIG. 6

FIG. 7

FIG. 8

FIG. 9

FIG. 10

FIG. 11

FIG. 12

FIG. 13

Network

| Processor 1004 | | Communication interface 1008 |

Bus 1002

Memory 1006

Computing device 1000A

| Processor 1004 | | Communication interface 1008 |

Bus 1002

Memory 1006

Computing device 1000B

FIG. 14

## INTERNATIONAL SEARCH REPORT

| International application No. |
| --- |
| **PCT/CN2023/133357** |

| A. | CLASSIFICATION OF SUBJECT MATTER |
| --- | --- |

G06F9/50(2006.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS, CNTXT, ENTXT, VEN, CNKI: 资源, 分配, 调度, 任务, 运行, 独占, 进程, 绑定, 槽, 模型, 预测, 预估, resource, allocate, schedule, task, running, exclusive, process, bind, slot, model, estimate, prediction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 107045456 A (HUAWEI TECHNOLOGIES CO., LTD.) 15 August 2017 (2017-08-15) description, paragraphs 68-102, and figures 2-7 | 1-6, 10-17, 21-26 |
| Y | CN 115098257 A (CHINA TELECOM CORP., LTD.) 23 September 2022 (2022-09-23) description, paragraphs 66-150, and figures 1-6 | 1-6, 10-17, 21-26 |
| Y | CN 114371926 A (TSINGHUA UNIVERSITY) 19 April 2022 (2022-04-19) description, paragraphs 29-48, and figure 1 | 2-3, 13-14 |
| A | CN 112328378 A (NANJING TRANSWARP INTELLIGENT TECHNOLOGY CO., LTD.) 05 February 2021 (2021-02-05) entire document | 1-26 |
| A | CN 113485838 A (BEIJING WODONG TIANJUN INFORMATION TECHNOLOGY CO., LTD. et al.) 08 October 2021 (2021-10-08) entire document | 1-26 |
| A | JP 2010160552 A (NEC CORP.) 22 July 2010 (2010-07-22) entire document | 1-26 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 January 2024** | **24 January 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/133357** |

| C. | DOCUMENTS CONSIDERED TO BE RELEVANT | |
|---|---|---|
| Category* | Citation of document, with indication, where appropriate, of the relevant passages | Relevant to claim No. |
| A | US 2022012089 A1 (ACCENTURE GLOBAL SOLUTIONS LIMITED) 13 January 2022 (2022-01-13)<br>entire document | 1-26 |

Form PCT/ISA/210 (second sheet) (July 2022)

## INTERNATIONAL SEARCH REPORT
### Information on patent family members

International application No.

**PCT/CN2023/133357**

| Patent document cited in search report | | | Publication date (day/month/year) | Patent family member(s) | | | Publication date (day/month/year) |
|---|---|---|---|---|---|---|---|
| CN | 107045456 | A | 15 August 2017 | WO | 2017133351 | A1 | 10 August 2017 |
| CN | 115098257 | A | 23 September 2022 | None | | | |
| CN | 114371926 | A | 19 April 2022 | None | | | |
| CN | 112328378 | A | 05 February 2021 | None | | | |
| CN | 113485838 | A | 08 October 2021 | None | | | |
| JP | 2010160552 | A | 22 July 2010 | None | | | |
| US | 2022012089 | A1 | 13 January 2022 | None | | | |

Form PCT/ISA/210 (patent family annex) (July 2022)

**EP 4 625 168 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211624304